(19) Europäisches Patentamt
European Patent Office
Office européen des brevets

(11) **EP 3 961 121 B1**

(12) **EUROPÄISCHE PATENTSCHRIFT**

(45) Veröffentlichungstag und Bekanntmachung des Hinweises auf die Patenterteilung:
**18.01.2023 Patentblatt 2023/03**

(21) Anmeldenummer: **20192369.5**

(22) Anmeldetag: **24.08.2020**

(51) Internationale Patentklassifikation (IPC):
**F24S 25/15** (2018.01)     **F24S 25/10** (2018.01)

(52) Gemeinsame Patentklassifikation (CPC):
**F24S 25/15; F24S 25/10;** Y02B 10/20; Y02E 10/47

(54) **UNTERKONSTRUKTION ZUR MONTAGE VON SICH SELBSTTRAGENDEN PHOTOVOLTAIKMODULEN**

SUBSTRUCTURE FOR MOUNTING SELF-SUPPORTING PHOTOVOLTAIC MODULES

STRUCTURE PORTEUSE DESTINÉE AU MONTAGE DES MODULES PHOTOVOLTAÏQUES AUTOPORTANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(43) Veröffentlichungstag der Anmeldung:
**02.03.2022 Patentblatt 2022/09**

(73) Patentinhaber: **BEC-Energie Consult GmbH**
**12203 Berlin (DE)**

(72) Erfinder: **Brockmöller, Dr. Andreas**
**12203 Berlin (DE)**

(74) Vertreter: **Hertin und Partner**
**Rechts- und Patentanwälte PartG mbB**
**Kurfürstendamm 54/55**
**10707 Berlin (DE)**

(56) Entgegenhaltungen:
**EP-A1- 2 958 230     CN-U- 202 616 248**
**CN-U- 203 083 185**

**Beschreibung**

Die Erfindung betrifft eine Unterkonstruktion zur Montage von sich selbsttragenden Photovoltaikmodulen. Die Unterkonstruktion weist dabei Bodenstützen mit Halterungen zur Aufnahme der selbsttragenden Photovoltaikmodule auf. Darüber hinaus umfasst die Bodenstütze einen Bodenverankerungskörper und einen stabförmigen Träger. Die Bodenstützen lassen sich in drei verschiedene Ausgestaltungen einteilen: in Anfangsbodenstützen, Regelbodenstützen und Endbodenstützen. Die Anfangsbodenstützen sind darüber definiert, dass sie jeweils eine erste Halterung umfassen, wobei eine Auflagefläche der ersten Halterung einen Winkel α mit dem stabförmigen Träger der Bodenstütze einschließt, welcher einen Wert größer 90° aufweist. Ferner umfassen die Regelbodenstützen jeweils zwei Halterungen, welche einen Winkel β mit einem Wert kleiner 90 ° und einen Winkel γ mit einem Wert größer 90° zwischen Auflagestage und stabförmigen Träger aufweisen. Die Endbodenstützen weisen jeweils eine vierte Halterung mit einem Winkel kleiner als 90° auf zwischen Auflagefläche und stabförmigen Träger.

Darüber hinaus betrifft die Erfindung ein System zur Montage von sich selbsttragenden Photovoltaikmodulen.

Hintergrund und Stand der Technik

Angesichts der maßgeblich vom Menschen verursachten globalen Erwärmung ist eine Dekarbonisierung der Energiewirtschaft durch Beendigung der Nutzung von fossilen Energieträgern von hoher Bedeutung. Ebenso stellen die Endlichkeit der fossilen Energieträger wie Erdöl, Kohle und Erdgas sowie die Risiken einer alternativen Kernenergie wichtige Gründe für die Energiewende dar. Die Lösung des globalen Energieproblems gilt als zentrale Herausforderung des 21. Jahrhunderts.

Wesentliche Elemente der Energiewende sind der Ausbau der erneuerbaren Energien. Zu den erneuerbaren Energien zählen beispielsweise Bioenergie, Erdwärme, Wasserkraft, Meeresenergie, Windenergie und insbesondere Sonnenenergie (Solarthermie, Photovoltaik).

Unter Photovoltaik versteht man die direkte Umwandlung von Lichtenergie, meist aus Sonnenlicht, in elektrische Energie mittels Solarzellen. Mit großem Abstand wichtigstes Anwendungsgebiet ist heute die netzgebundene Stromerzeugung primär auf Dachflächen und als Freiflächenanlage, um konventionelle Kraftwerke zu ersetzen.

Bei den Montagesystemen für Freiflächenanlagen wird zwischen Festaufständerung und Trackingsystemen unterschieden. Bei der Festaufständerung wird abhängig vom Untergrund ein Stahl- oder Aluminiumgestell durch Rammung im Boden verankert oder auf Betonblöcken befestigt; der Winkel der Module wird nach der Montage nicht mehr verändert.

Trackingsysteme folgen dem Sonnenverlauf, um immer eine optimale Ausrichtung der Module zu gewährleisten. Trackingsysteme weisen jedoch im Vergleich zu Systemen mit einer Festaufständerung wesentlich höhere Kosten auf. Diese setzen sich insbesondere durch hohe Investitionskosten, hohe Betriebskosten für die Wartung sowie die benötigte Energie für die Nachführung der einzelnen Photovoltaikmodule zusammen.

Festaufständerungen sind im Stand der Technik hinlänglich bekannt. Hier existieren dabei unterschiedliche Aufstellvarianten.:

CN203083185 offenbart eine Montagekonstruktionen für einen Solarkollektor zur Wassererwärmung. Hierbei werden Module der Solarkollektoren mittels einer Trägerkonstruktion umfassend eine Mehrzahl von senkrechten Stützen montiert.

CN202616248 betrifft eine Montagekonstruktion für Solarzellenmodule auf einem Gebäudedach. Die Solarzellenmodule werden von einem ersten und zweiten Träger gehalten, wobei die Einstellung eines Azimuth- und Neigungswinkels ermöglicht wird.

EP 2 958 230 A1 offenbart eine Unterkonstruktion für die Montage von einer ersten und zweiten Solarzellenanordnung, die in Bezug auf eine Richtung nebeneinander positioniert sind und jeweils eine Vielzahl von Solarzellenmodulen umfassen. Die Solarzellenmodulen weisen jeweils einen Rahmen auf, welcher an Querträgern und Längsträger mittels Schraubverbindungen angebracht wird. Die Querträgern und Längsträger werden wiederum über entsprechende Halterungen an aufrechtstehenden Bodenstützen mittels weiterer Schraubverbindungen montiert.

Die DE 10 2018 114 621 A1 offenbart ein Trägersystem zur Anordnung einer Photovoltaikeinheit, welche mindestens ein, bevorzugt eine Vielzahl von Photovoltaikmodulen aufweist. Das Trägersystem umfasst vier Bodenstützen, welche anhand von quer und längs ausgerichteten Trägern miteinander verbunden sind. Die Träger sind dazu eingerichtet, die Photovoltaikmodule aufzunehmen. Dabei ist das Trägersystem derartig konstruiert, dass die Module einerseits vom Boden beabstandet montiert werden und andererseits jeweils einen Neigungswinkel aufweisen.

Eine dem vorhergehenden Patentdokument ähnliche Offenbarung DE 10 2009 037 978 B4 beschreibt ebenfalls ein Trägersystem für Photovoltaikmodule mit einer Neigung, sowie Quer- und Längsträgern (im Dokument u.a. als Modulschienen bezeichnet). Das Trägersystem ist in Nord-Süd Richtung ausgerichtet. Hierbei sind Bodenträger in Reihen aufgestellt, wobei alle in einer Reihe liegenden Bodenträger eine gleiche Höhe aufweisen und durch Querträger miteinander verbunden sind. Photovoltaikmodule sind im beschriebenen System zwischen den Modulschienen (Längsträgern) und zwischen den Querträgern platziert. Das Trägersystem umfasst drei bis fünf Trägerreihen, wobei ein Bodenträger nicht die Höhe von 3,5 Metern überschreitet.

Insbesondere das Aufweisen von Quer- und Längsträgern geht mit einer Vielzahl von Nachteilen einher. Die für eine Photovoltaikeinheit gesamte beanspruchten Mengen an Material der Quer- und Längsträger sind insbesondere für die Montage, für den Transport und für die Herstellung von großem Nachteil. Die Längssowie Querträger können zudem nur eine begrenzte Länge erreichen, da sie andernfalls durch ihr Eigengewicht einem großen Biegemoment unterliegen, welche zu einer unerwünschten Materialverformung führt.

Die geometrischen Ausmaße des Trägersystems sind darüber hinaus durch den Neigungswinkel begrenzt. Je größer das Trägersystem ausgestaltet ist, desto weiter muss dieses in die Höhe ausgestaltet werden. Ein wesentlicher Nachteil ist darüber hinaus das nachteilige Verhalten der offenbarten Konstruktionen gegenüber Wind bzw. Windböen.

Aufkommender Wind, welcher unter die Photovoltaikeinheit strömt, generiert sehr hohe Auftriebskräfte (die Photovoltaikeinheit wirkt wie ein Flügel), sodass die Stützen der Konstruktion hohen Belastungen/ Lastkräften standhalten müssen.

Die Patentschrift DE 20 2010 035 000 B4 offenbart ein Festaufständerungen von Photovoltaikmodulen, wobei die Photovoltaikmodule in geraden, parallel zueinander verlaufenden Reihen angeordnet sind. Dabei weisen die Photovoltaikmodule in den Reihen eine Neigung von einem Winkel $\alpha$ zu einer Horizontalen und einem Winkel $\beta$ zur Nord-Südrichtung auf. Die Reihen weisen einen Abstand voneinander auf, insbesondere zur Vermeidung von effizienzmindernd wirkenden Schatten auf benachbarte Reihen.

Durch die beschriebenen Abstände wird die Fläche einer Photovoltaik Freiflächen-Anlage nachteilig nicht in ihrer Gesamtheit genutzt, da zwischen jeder Reihe eine Freifläche ausgestaltet ist. Ferner sind, durch die voneinander beabstandeten Photovoltaikmodulreihen eine nachteilig hohe Anzahl von Stützen notwendig, da jede Reihe eine in der Höhe kleinere Bodenstützreihe und eine zweite in Höhe größere Bodenstützreihe aufweist. Reihen teilen sich nachteilig keine Bodenstützen. Die hohe Anzahl an Bodenstützen führt zu einem hohen Materialverbrauch und einem erhöhten Montageaufwand.

Die EP 2 771 913 B1 offenbart ein Trägersystem, welches zur Montage von sich selbsttragenden Photovoltaikmodulen geeignet ist. Das Trägersystem umfasst Bodenstützen mit an ihrem oberen Ende aufweisenden Auflageplatten für die Aufnahme von einem bis zu 4 Photovoltaikmodulen. Dabei sind zwei Bodenstützenarten im Trägersystem vorgesehen: eine erste in der Höhe kleinere Bodenstütze und eine zweite in der Höhe größer ausgestaltete Bodenstütze. Das Trägersystem ist in der Art ausgestaltet, dass ein Photovoltaikmodul einen Neigungswinkel $\alpha$ aufweist, wobei jedes Photovoltaikmodul durch vier Bodenstützen gehaltert wird. Für die Erreichung des Neigungswinkels werden die Photovoltaikmodule auf zwei erste und zwei zweite Bodenstützen gehaltert. Ein benachbartes in der gleichen Reihe enthaltendes Photovoltaikmodul wird ebenfalls durch zwei Bodenträger gehaltert, welche ein erstes Photovoltaikmodul haltert. Dementsprechend teilen sich immer zwei in Reihe befindlichen Photovoltaikmodule jeweils zwei Bodenstützen. Photovoltaikmodule aus einer benachbarten Reihe weisen zudem auch einen Neigungswinkel $\alpha$ auf, wobei diese Module auf den gleichen zweiten Bodenstützen der Photovoltaikmodule der ersten Reihe gehaltert werden. Benachbarten Photovoltaikmodulreihen teilen sich demnach die zweiten Bodenstützen, sodass die Photovoltaikmodule durch den Neigungswinkel eine aufeinander zulaufende Dachfläche ausgestaltet sind.

Die aus der Patentschrift beschriebene Konstruktion ist vorrangig nur für eine Ost-West Ausrichtung des Photovoltaiksystem ausgestaltet. Die Konstruktion lässt sich ohne Weiteres nicht auf eine Nord-Süd-Ausrichtung adaptieren, bei welcher es bevorzugt ist, einerseits einen identischen Neigungswinkel der Photovoltaikmodule zur Sonne bereitzustellen und andererseits es darauf ankommt, das Modul in einem der Sonne eine zugewandten (und nicht abgewandten) Neigungswinkel zu montieren. Weiterhin bietet die offenbarte Konstruktion eine hohe Angriffsfläche für Wind, sodass hohe Auftriebskräfte entstehen, wenn Wind unterhalb der Photovoltaikmodule strömt

Im Lichte des Standes der Technik herrscht mithin ein Bedarf an alternativen oder verbesserten Unterkonstruktionen, insbesondere einer effizienten und materialsparenden Konstruktion in Nord-Süd- Ausrichtung, welche sich zudem durch eine hohe Stabilität auch gegenüber Luftströmungen auszeichnet.

Aufgabe der Erfindung

Die Aufgabe der Erfindung war es daher die Nachteile des Standes der Technik zu beseitigen und eine Unterkonstruktion, ein Verfahren und ein System zur Montage von sich selbsttragenden Photovoltaikmodulen bereitzustellen, welches eine Freifläche effizient nutzt, eine Montage vereinfacht, Material verringert und Belastungen durch äußere Parameter, wie Wind vermindert.

Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung eine Unterkonstruktion zur Montage von sich selbsttragenden Photovoltaikmodulen umfassend Bodenstützen, wobei die Bodenstützen Halterungen zur Aufnahme der selbsttragenden Photovoltaikmodule, einen Bodenverankerungskörper und einen stabförmigen Träger aufweisen, wobei die Unterkonstruktion ausschließlich Bodenstützen umfasst, an denen die selbsttragenden Photovoltaikmodule unmittelbar angebracht werden können, sodass auf die Verwendung von Längs- und Querträgern verzichtet werden kann und wobei die Bodenstützen als Anfangsbodenstützen, Regelbodenstützen und Endbodenstütze ausgestaltet sind und wobei

- die Anfangsbodenstützen jeweils eine erste Halterung umfassen;
  wobei eine Auflagefläche der ersten Halterung einen Winkel $\alpha$ mit dem stabförmigen Träger der Bodenstütze einschließt, welcher einen Wert größer 90° aufweist
- die Regelbodenstützen jeweils eine zweite und eine dritte Halterung umfassen, welche in der Höhe versetzt zueinander sind und
  wobei eine Auflagefläche der zweiten Halterung einen Winkel $\beta$ und eine Auflagefläche der dritten Halterung einen Winkel $\gamma$ mit dem stabförmigen Träger der Bodenstütze einschließt, wobei der Winkel $\beta$ einen Wert kleiner 90° aufweist und der Winkel $\gamma$ einen Wert größer 90° aufweist
- die Endbodenstützen jeweils eine vierte Halterung umfassen; wobei eine Auflagefläche der vierten Halterung einen Winkel $\delta$ mit dem stabförmigen Träger der Bodenstütze einschließt, welcher einen Wert kleiner 90° aufweist, wobei die Halterungen jeweils eine Einsteckhülse, eine Klammeröffnung und Zentrierelemente aufweisen, wobei der innere Querschnitt der Einsteckhülse dem äußeren Querschnitt des stabförmigen Trägers entspricht, sodass die Halterung mittels der Einsteckhülse auf dem stabförmigen Träger befestigt vorliegt, wobei die Zentrierelemente über die Auflagefläche der Halterung ragen und derart ausgestaltet sind, dass diese einen Rahmen eines selbsttragenden Photovoltaikmoduls führen und wobei die Klammeröffnung der Aufnahme einer Klammer dient mittels derer der Rahmen des selbsttragenden Photovoltaikmodules kraftschlüssig mit der Halterung verbindbar ist.

Die Unterkonstruktion wird bevorzugt für Photovoltaik-Freiflächenanlagen genutzt und ermöglicht durch ihre Ausgestaltung eine besonders effiziente Nutzung einer Gesamtfläche. Die vorliegende Erfindung ermöglicht es insbesondere bei einer Nord-Süd-Ausrichtung besonders große Mengen Sonnenenergie in elektrische Energie zu wandeln. Die einzelnen Photovoltaikmodule werden beispielsweise in einem Neigungswinkel von 0- 20 Grad (in äquatorialen Gegenden auch höher) ausgerichtet, wobei eine geringfügig Verschattung der hintereinander aufgestellten Module bewusst in Kauf genommen wird, da wie im Folgenden im Detail dargelegt die mit der Erfindung einhergehenden Vorteile der Unterkonstruktion in der Summe überwiegen.

Entgegen der Offenbarungen aus dem Stand der Technik nutzt die vorliegende Erfindung dabei vorteilhaft keine Längs- und Querträger, auf welchen Photovoltaikmodule aufgespannt werden. Für die Erfinder war es nicht vorherzusehen und daher durchaus überraschend, dass das Verzichten von Längs- und Querträgern für die erfindungsgemäße Unterkonstruktion zu einer ausreichend stabilen Konstruktion führt, welche dazu geeignet ist, selbsttragende Photovoltaikmodule zu haltern.

Das Verzichten auf Längs- sowie Querträger führt insbesondere zu Vorteilen im Herstellungsprozess, Montageprozess, dem Transport und ist ressourcensparend im Hinblick auf die Umwelt. Der Montageprozess kann demnach in einfacher Weise durchgeführt werden, in dem bspw. Teams aus zwei Personen Bodenstützen in einen Boden rammen, ohne anschließend schwere Längs- und Querträger an den Bodenstützen anbringen zu müssen. Sobald die Unterkonstruktion, umfassend ausschließlich Bodenstützen, montiert ist, können unmittelbar die Photovoltaikmodule an den Bodenstützen angebracht werden.

Ferner ist es möglich anhand der erfindungsgemäßen Unterkonstruktion ein durchgängiges (ohne Unterbrechungen) Photovoltaikfeld über mehrere hundert Meter in eine Länge und eine Breite zu errichten. Der Dimensionierung des Photovoltaikfeldes sind dabei keine Grenzen gesetzt, da die Bodenstützen zur Erreichung eines Neigungswinkels der Photovoltaikmodule nicht in eine nachteilige Höhe aufmontiert werden müssen.

Entlang des Photovoltaikfeldes sind alle Bodenstützen in etwa gleich groß in der Höhe. Die im Stand der Technik, wie z.B. der DE 10 2018 114 621 oder der DE 10 2009 037 978 B4, beschriebenen zusammenhängenden Konstruktionen einer Nord-Südausrichtungen weisen hingegen entlang ihrer Reihen immer höher werdende Bodenstützen auf, sodass nach einigen Metern eine Höhe erreicht wird, welche zu einem großen Schatten der Konstruktion führt und zudem einen hohen Stabilitätsverlust nach sich zieht.

Überdies erweist sich die erfindungsgemäße Konstruktion als besonders stabil gegenüber äußeren Parametern, wie einem aufkommenden Wind (oder aber auch Erdbeben). Dadurch, dass die zweite und dritte Halterung der Regelbodenstützen in der Höhe versetzt vorliegen, kann der Wind unter dem erfindungsgemäßen System bzw. Unterkonstruktion durch einen entstehenden Spalt entweichen. Es bildet sich daher keine durchgehend verschlossene Auftriebsfläche durch die Photovoltaikmodule, sodass die auf die Bodenstützen wirkenden Lastkräfte (dynamische und statische) sehr viel geringer sind, als in bekannten Unterkonstruktionen des Standes der Technik.

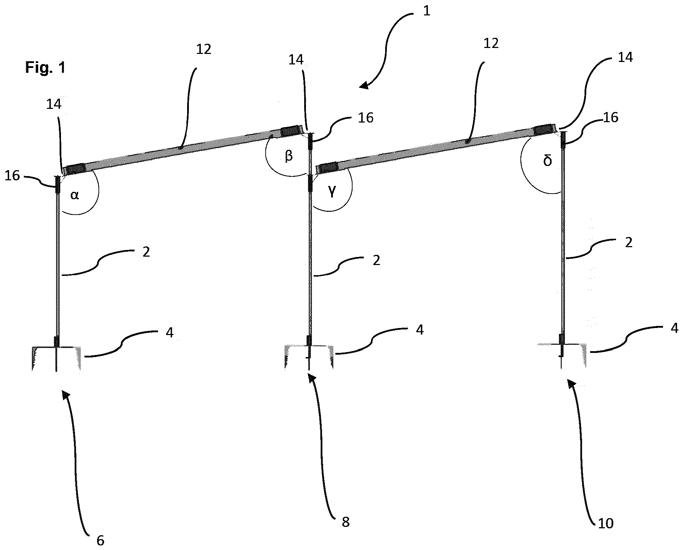

Die erhaltene Montage der Photovoltaikmodule mittels der erfindungsgemäßen Unterkonstruktion kann im Querschnitt auch als ein Sägezahnmuster beschrieben werden (s. bspw. Fig. 1-3). Bevorzugtes Merkmal eines solchen Sägezahnmusters ist die in etwa gleich hintereinander angestellten (Neigungswinkel) Photovoltaikmodule, wobei die Photovoltaikmodul höhenversetzt installiert vorliegen, um ein Aufmontieren in der Höhe zu vermeiden. Zwar ergibt sich durch die höhenversetzte Konstruktion eine geringfügige Verschattung im Querschnitt hintereinander liegender Photovoltaikmodule. Die Möglichkeit der beliebigen Aufstellung einer Vielzahl Photovoltaikmodule hintereinander führt in der Summe jedoch vorteilhaft zu einer effizienteren Nutzung der Gesamtbodenfläche.

Im Sinne der Erfindung sind Bodenstützen in der Art ausgestaltet, dass diese bevorzugt mindestens eine Halterung einen stabförmigen Träger und eine Bodenverankerungskörper umfasst. Der Bodenverankerungskörper der Bodenstütze wird bevorzugt in den Boden eingebracht, sodass der mit dem Bodenverankerungskörper in Verbindung stehende stabförmige Träger bevorzugt in etwa senkrecht bzw. vertikal gegenüber einer Bodenfläche vorliegt. Weiterhin liegt der Schwerpunkt der Bodenstützen bevorzugt in einem unteren Bereich der Bodenstütze in der Nähe des Bodens. Dies führt zu sehr guten Eigenschaften im Hinblick auf die Stabilität der Bodenstützen im Einzelnen und auch im Zusammenwirken im Zuge der gesamten Unterkonstruktion. Der Bodenverankerungskörper weist dabei bevorzugt ein geringeres Gewicht als der stabförmige Träger auf. Es war überraschend, dass der Bodenverankerungskörpers bei dem verhältnismäßig geringen Gewicht im Vergleich zu dem stabförmigen Träger eine ausreichende Stabilität der gesamten Bodenstütze ermöglicht.

In einer bevorzugten Ausführungsform weist der Bodenverankerungskörper ein Gewicht von 0,15kg - 2,50 kg, insbesondere 0,6 kg auf.

In einer weiteren bevorzugten Ausführungsform weist der stabförmige Träger ein Gewicht von 0,9kg - 3 kg, insbesondere 1,2 kg auf.

In einer weiteren bevorzugten Ausführungsform liegt das Gewicht eines stabförmigen Trägers in Bezug auf einen Bodenverankerungskörper in einem Verhältnis von bevorzugt 2,5:1 bis 1,5:1. Einem Fachmann ist ersichtlich, dass alle Verhältniswerte zwischen den beschriebenen Grenzverhältnissen (2,5:1 bis 1,5:1) ebenfalls im Sinne der Erfindung bevorzugt sind. Zum Beispiel folgende Verhältnisse 2 zu 1; 1,8 zu 1,1; 2,3 zu 1,4 etc. Besonders bei den oben beschrieben Gewichtswerten des Bodenverankerungskörpers und der stabförmigen Träger weist die Erfindung ein vorteilhaftes Stabilitätsverhalten auf. Durch die Kombination aus Eigengewicht der Bodenstütze (stabförmiger Träger und Bodenverankerungskörper) und Verankerung der Bodenstütze mittels Bodenverankerungskörper entsteht eine Unterkonstruktion, welche hohen äußeren Lasten/Belastungen standhält.

Ein selbsttragendes Photovoltaikmodul ist bevorzugt ein Photovoltaikmodul, welches gerahmt ist. Ein derartiges Photovoltaikmodul besteht derzeit bevorzugt aus siliziumbasierten Solarzellen, es können jedoch auch andere Materialien zum Einsatz kommen, die auf einen Metallrahmen (bevorzugt Aluminiumrahmen) montiert und bevorzugt von einer Glasplatte abgedeckt sind. Die Solarzellen werden mechanisch durch das Glas vor Umwelteinflüssen geschützt, z. B. Hagel, TCO-Korrosion. Der Aluminiumrahmen dient insbesondere dem Schutz der Glasscheibe bei Transport, Handhabung und Montage, der Befestigung und für die Versteifung des Verbundes.

Die bevorzugten Photovoltaikmodule entsprechen einer Bauartzertifizierung von IEC 61215:2005 und/oder IEC 61646:2008. Die Zertifizierung wird bevorzugt durch unabhängige technische Prüforganisationen (wie bspw. TÜV Rheinland) durchgeführt.

Rahmenlose Module sind hingegen meist als Glas-Glas-Module ausgeführt und werden im Stand der Technik direkt auf Trägerschienen einer Unterkonstruktion mit speziellen Klemmen befestigt. Ein weiterer Vorteil der vorliegenden Erfindung ist, dass die erfindungsgemäße Unterkonstruktion ebenfalls rahmenlose Photovoltaikmodule haltern kann. Eine derartige Verwendung ermöglicht vergrößert das Anwendungsspektrum der Erfindung und führt zu einer zusätzlichen Einsparung des Rahmengewichts der Photovoltaikmodule,

Rahmenloses Glas-/Glasmodule umfassen bevorzugt einen leicht modifizierten Rahmen und erzeugen beidseitig Strom. Im Stand der Technik sind derartige PV-Module bspw. des Unternehmens "Trinasolar" mit der Produktbezeichnung "Vertex" bekannt. Die Vertex-Reihe besteht aus dem bifazialem Glas-Glas-Modul "Duomax V" und dem Glas-Folien-Modul "Tallmax V". Die Module basieren auf großformatigen 210-Millimeter-Silizium-Wafern, gedrittelte Solarzellen, Multi-Busbars und monokristalliner PERC-Zelltechnologie. Die Moduleffizienz liegt "Trina Solar" zufolge bei bis zu 21 Prozent.

Im gesamten Dokument werden die Photovoltaikmodule auch als PV-Module abgekürzt und stehen demnach synonym füreinander.

Der Bodenverankerungskörper dient bevorzugt als Anbindung der Unterkonstruktion in einen Boden. Bodenverankerungskörper ist dabei bevorzugt austauschbar, sodass dieser auf Gegebenheiten der Umgebung angepasst werden kann. So sind beispielsweise unterschiedliche Bodenverankerungskörper zu verwenden, wenn der Boden aus Stein und/oder aus Sand ausgestaltet ist.

Die stabförmigen Träger (auch Fachwerkträger) sind bevorzugt in die Höhe ausgerichtet. Sie stehen in fester Verbindung mit dem Bodenverankerungskörper und sind bevorzugt in einer senkrechten Richtung im Vergleich zu einem Bodenverankerungskörper und/oder einer Bodenfläche ausgestaltete.

Die Bodenstützen einer vollständig montierten Unterkonstruktion sind in m Reihen und n Spalten aufgestellt, sodass eine (m x n) Matrix erhalten wird. Die Bodenstützen der ersten Reihe (i=1) sind bevorzugt als Anfangsbodenstützen zu bezeichnen. Die Bodenstützen der letzten Reihe (i=m) sind bevorzugt als Endbodenstützen zu bezeichnen. Die Bodenstützen, welche in den Reihen zwischen der Anfangsbodenstützen und der Endbodenstützen ausgestaltet sind, werden als Regelbodenstützen beschrieben. Anders ausgedrückt sind die Bodenstützen der zweiten Reihen bis zur vorletzten Reihe der Unterkonstruktion bevorzugt als Regelbodenstützen zu bezeichnen: $\sum_{i=2}^{m-1} i$ (i entspricht den Reihen, welche als Regelbodenstütze ausgestaltet ist).

In einer weiteren bevorzugten Ausführungsform sind die Reihen bzw. die Bodenstützen bevorzugt. 0,5 Meter bis 3 Meter, stärker bevorzugt 1 Meter bis 2,5 Meter insbesondere 1,5 bis 2,2 Meter voneinander beabstandet. Bei diesen Abständen können die PV-Module vorteilhaft an ihren Ecken durch die Bodenstützen mit ihren Halterungen gehaltert werden.

Erfindungsgemäß umfasst die Halterung eine Auflagefläche für die PV-Module. Die Auflagefläche ist bevorzugt die Fläche der Halterung, welche den flächenmäßig größten Kontakt zwischen einer Halterung und dem PV-Modul aufweist. Dabei sind die Halterungen an dem stabförmigen Träger der Bodenstützen befestigt.

Die Auflagefläche der ersten Halterung schließt bevorzugt einen Winkel α zu einem stabförmigen Träger der Bodenstütze, insbesondere der Anfangsbodenstütze, ein. Bevorzugt handelt es sich bei dem Winkel um einen rückseitigen Winkel der Auflagenfläche, wobei der Winkel α bevorzugt ein stumpfer Winkel ist, welcher einen Wert größer 90° aufweist.

Die erste Halterung liegt bevorzugt an der Anfangsbodenstütze vor, sodass bei vertikaler Positionierung der Bodenstütze einen Winkel von α - 90° den Neigungswinkel zur Sonne der ersten Reihen der Photovoltaikmodule definiert.

Die Auflagefläche der zweiten Halterung schließt bevorzugt einen Winkel β zu einem stabförmigen Träger der Bodenstütze, insbesondere der Regelbodenstütze, ein. Auch hier handelt es sich bevorzugt um einen rückseitigen Winkel der Auflagefläche, wobei der Winkel β ein spitzer Winkel, nämlich ein Winkel kleiner 90° ist.

Die zweite Halterung liegt bevorzugt an einer Regelbodenstütze vor, sodass eine zweite Reihe von Photovoltaikmodulen bevorzugt zwischen den ersten Halterungen der Anfangsbodenstützen und den zweiten Halterungen der Regelbodenstützen installiert werden kann. Der Winkel 90° - β kennzeichnet mithin bevorzugt einen Neigungswinkel zur Sonne der Photovoltaikmodule an den Regelbodenstützen. Die Winkel α und β ergeben bevorzugt einen Gesamtwinkel von ca. 180°. Abweichungen können insbesondere im Falle unebener Bodenfläche auftreten bzw. bewusst vorgesehen sein.

Die Auflagefläche der dritten Halterung schließt bevorzugt einen Winkel γ zu einem stabförmigen Träger der Bodenstütze, insbesondere der Regelbodenstütze, ein. Bevorzugt handelt es sich bei dem Winkel um einen rückseitigen Winkel der Auflagenfläche, sodass insbesondere der Winkel γ ein stumpfer Winkel ist, welcher einen Wert größer 90° aufweist.

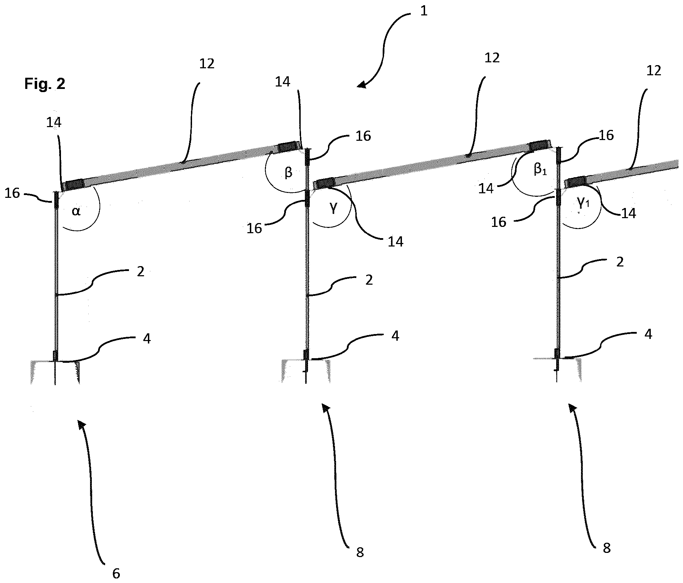

Die zweite und dritte Halterung sind bevorzugt gegenüberliegend an den Regelbodenstützen installiert, wobei die dritte Halterung bevorzugt höhenversetzt unterhalb der zweiten Halterung befestigt ist. Die Auflagefläche der dritten Halterung dient mithin der Installation einer weiteren Reihe von Photovoltaikmodulen. An der gegenüberlieberliegenden Seite kann das Photovoltaikmodule an einer (zweiten Halterung) einer weiteren Regelbodenstütze oder aber einer Endbodenstützen installiert werden (vgl. Fig. 1 oder 2).

Die Auflagefläche der vierten Halterung schließt bevorzugt einen Winkel δ zu einem stabförmigen Träger der Bodenstütze, insbesondere der Endbodenstütze, ein. Bevorzugt handelt es sich bei dem Winkel um einen rückseitigen Winkel der Auflagenfläche, sodass insbesondere der Winkel δ ein spitzer Winkel ist, welcher einen Wert kleiner 90° aufweist.

Analog zum Winkel β für die Zwischenreihen definiert der Winkel 90° - δ bevorzugt den Neigungswinkel zur Sonne für die jeweilige Endreihe der Photovoltaikmodule.

Die ersten Halterungen für die Anfangsbodenstützen oder dritten Halterungen für die Regelbodenstützen mit jeweils stumpfen Einschlusswinkeln mit dem stabförmigen Träger können im Sinne der Erfindung auch als untere Halterungen bezeichnet werden. Für das geneigt installierte Photovoltaikmodul dienen diese unteren Halterungen bevorzugt der Befestigung der tieferliegenden (unteren) Seite.

Die zweiten Halterungen für die Regelbodenstützen oder die vierten mit jeweils spitzem Einschlusswinkeln mit dem stabförmigen Träger können im Sinne der Erfindung auch als obere Halterungen bezeichnet werden. Für das geneigt installierte Photovoltaikmodul dienen diese oberen Halterungen bevorzugt der Befestigung der höherliegende (oberen) Seite.

In einer bevorzugten Ausführungsform weisen die Halterungen eine Einsteckhülse auf mittels derer die Halterung auf den stabförmigen Träger befestigt werden können. Bevorzugt entspricht zu diesem Zweck der innere Querschnitt der Einsteckhülse dem äußeren Querschnitt des stabförmigen Trägers. Eine Befestigung der Halterungen an dem stabförmigen Träger kann beispielsweise mittels Crimpens der Einsteckhülsen erfolgen. Die Einsteckhülsen der Halterungen können im Sinne der Erfindung auch als Halterungshülsen bezeichnet werden.

Bei den Halterungen definiert der Einschlusswinkel zwischen der Auflagefläche und der Halterungshülse somit bevorzugt den Einschlusswinkel zwischen der Auflagefläche und dem stabförmigen Träger nach Installation Halterung auf dem stabförmigen Träger.

In einer weiteren bevorzugten Ausführungsform umfasst die erfindungsgemäße Unterkonstruktion eine Vielzahl von Regelbodenstützenreihen. Die Regelbodenstützen können dabei bevorzugt jeweils unterschiedliche Winkel ihrer Halterungen aufweisen. Die erste Regelbodenstützenreihe weist bevorzugt die beschriebenen Winkel β und γ auf. Die in der darauffolgenden Reihe auftretende Regelbodenstützen weisen wiederum weitere Halterungen auf, welche einen Winkel $\beta_1$ und $\gamma_1$ mit dem stabförmigen Träger einschließen. Jede weitere folgende Regelbodenstützenreihe weist einen Winkel $\sum_{i=2}^{m-1}\beta_i$ und einen Winkel $\sum_{i=2}^{m-1}\gamma_i$ auf.

In einer weiteren bevorzugten Ausführungsform gilt bevorzugt $\alpha \approx \gamma \approx \gamma_1 \approx \sum_{i=2}^{m-1}\gamma_i > 90°$ und $\beta \approx \beta_1 \approx \sum_{i=2}^{m-1}\beta_i \approx \delta < 90°$. Darüber hinaus $\alpha + \beta \approx 180°$ und/oder $\beta + \gamma \approx 180°$.

In einer weiteren bevorzugten Ausführungsform gilt bevorzugt $\alpha = \gamma = \gamma_1 = \sum_{i=2}^{m-1}\gamma_i > 90°$ und $\beta = \beta_1 = \sum_{i=2}^{m-1}\beta_i = \delta < 90°$. Darüber hinaus $\alpha + \beta = 180°$ und/oder $\beta + \gamma = 180°$.

Die Regelbodenstützen weisen bevorzugt zwei Halterungen auf, insbesondere die zweite (obere) und dritte (untere) Halterung. Diese liegen in der Höhe voneinander versetzt am stabförmigen Träger vor, wobei es bevorzugt ist, dass die dritte Halterung unterhalb der zweiten Halterung vorliegt.

In einer bevorzugten Ausführungsform können die Halterungen auch nicht höhenverschoben vorliegen, sondern im Wesentlichen derselben Höhe an einem stabförmigen Träger befestigt sein. In diesem Fall gilt bevorzugt $\alpha \approx \gamma \approx \gamma_1 \approx \sum_{i=2}^{m-1}\gamma_i \approx 90°$ und $\beta \approx \beta_1 \approx \sum_{i=2}^{m-1}\beta_i \approx \delta \approx 90°$. Darüber hinaus $\alpha + \beta \approx 180°$ und/oder $\beta + \gamma \approx 180°$. In dieser Ausführungsform weisen die Photovoltaikmodule keinen Neigungswinkel auf. Es kann aber auch bevorzugt sein bei horizontal installierten Photovoltaikmodulen, einen Höhenversatz einzubringen, um selbst großflächiger Installation eine verbesserte Stabilität gegenüber Windbelastung zu gewährleisten.

Die beiden Halterungen sind bevorzugt 6 cm - 20cm, stärker bevorzugt 9 cm -17cm voneinander höhenverschoben. Beide Halterungen sind über Einsteckhülsen/ Halterungshülsen an den stabförmigen Trägern der Bodenstützen angebracht, sodass der Höhenversatz bevorzugt dem Abstand zwischen der oberen Öffnung beider Halterungshülsen entspricht. Der Abstand zwischen beiden Halterungen ermöglicht es, dass bei Aneinanderreihung der Photovoltaikmodule ein Spalt entsteht. Ferner ist der Höhenversatz essentiell dafür, dass die Unterkonstruktion nicht in eine nachteilige Höhe ausgestaltet werden muss, um einen Neigungswinkel aneinanderreihender Photovoltaikmodule zu erreichen.

Der Neigungswinkel wird einerseits durch den Abstand der Bodenstützen voneinander und andererseits durch die Höhe der Halterungen definiert, an denen die PV-Module befestigt sind.

In einer weiteren bevorzugten Ausführungsform ist die Unterkonstruktion dadurch gekennzeichnet, dass die zweite und dritte Halterung der Regelbodenstützen in Bezug auf den stabförmigen Träger diametral angeordnet vorliegen, sodass selbsttragende Photovoltaikmodule mindestens auf der ersten Halterung der Anfangsbodenstützen und der zweiten Halterung der Regelbodenstützen sowie auf der dritten Halterung der Regelbodenstützen und der vierten Halterung installiert werden können. Eine diametrale Anordnung der ersten sowie der zweiten Halterung ist bevorzugt vorteilhaft für die Stabilität der Unterkonstruktion und ermöglicht eine Aneinanderreihung von einer Vielzahl von PV-Modulen hintereinander, beispielsweise 5, 10, 15, 20 oder mehr.

Die diametrale Ausgestaltung der zweiten und dritten Halterung an den Regelbodenstützen ist Sinne der Erfindung bevorzugt eine entgegengesetzte Ausrichtung ihrer Richtungsvektoren. Der Richtungsvektor eine Halterung ist dabei bevorzugt über dessen Längsachse definiert, sodass der Richtungsvektor der Halterung auf ihrer Längsachse platziert ist und in einer vom stabförmigen Träger wegweisende Richtung zeigt. In einer Seitenansicht der Regelbodenstütze, nimmt die Regelbodenstütze abstrahiert die Form eines Buchstaben "T" an, wobei die waagerechten Schenkel des "T's" in der Höhe versetzt voneinander sind und bevorzugt einen Neigungswinkel aufweisen.

In einer weiteren bevorzugten Ausführungsform ist die Unterkonstruktion dadurch gekennzeichnet, dass die Halterungen jeweils eine vom Boden abgewendete Auflagefläche aufweisen, welche dazu eingerichtet sind selbstragende Photovoltaikmodule zu haltern.

In einer weiteren bevorzugten Ausführungsform ist die Unterkonstruktion dadurch gekennzeichnet, dass die Halterungen dazu eingerichtet sind eine Photovoltaikmodul-Ecke aufzunehmen. Die Aufnahme einer Ecke eines PV-Moduls reicht vorteilhaft bereits aus, dass die PV-Module positionsfest an den Bodenstützen angebracht sind. Dies führt dazu, dass die Halterungen in kleinen geometrischen Dimensionen ausgestaltet werden können, und damit die Montage sowie den Transport der Halterungen wesentlich vereinfachen. Obwohl die Halterungen nur sehr klein ausgestaltet sind, können diese jeweils eine PV-Modulecke zweier nebeneinander angeordneter PV-Module aufnehmen, demnach insgesamt zwei PV-Modulecken.

In einer weiteren bevorzugten Ausführungsform ist die Unterkonstruktion dadurch gekennzeichnet, dass der Winkel $\alpha$ und der Winkel $\gamma$ einen Wert von 90° - 120° aufweisen und der Winkel $\beta$ und der Winkel $\delta$ einen Wert von 60° - 90° aufweisen. Die Winkel ermöglichen einen vorteilhaften Neigungswinkel der PV-Module, nämlich 0-20 Grad zur Sonne. Dies zeigt sich besonders effizient bei der Umwandlung von Solarenergie in elektrische Energie bei einer Nord-Süd Ausrichtung der bevorzugten Unterkonstruktion.

In einer weiteren bevorzugten Ausführungsform ist die Unterkonstruktion dadurch gekennzeichnet, dass β und γ in der Summe einen Winkel von zwischen 170° und 190°, bevorzugt von etwa 180° ergeben, sodass die Auflageflächen der zweite und eine dritte Halterungen der Regelbodenstützen im wesentlichen parallele Auflageflächen bilden, welche in der Höhe vertikal versetzt sind.

Die höhenversetzt, aber im wesentlichen parallelen Auflageflächen erlauben vorteilhaft eine Installation der Photovoltaikmodule mit im Wesentlichen identischen Neigungswinkel zur Sonne. Durch die Installation einer Vielzahl, beispielsweise 5, 10, 20, 50 oder mehr von Reihen derartiger Regelbodenstützen hintereinander wird im Querschnitt das besonders bevorzugt Sägezahnmuster erhalten.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1% und umfassen stets den exakten Wert. Ähnlich beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

Den stabförmigen Trägern unterliegen bevorzugt den Anforderungen eines Bewehrungsstabes im Sinne der DIN 488. Dadurch, dass die Träger der Norm DIN 488 unterliegen, sind ihr Eigenschaften im Hinblick auf ihre Statik und ihre Festigkeit insbesondere im Kontext dynamischer Belastungen äußerer Parameter hinlänglich im Stand der Technik geprüft. Sie entsprechen demnach höchsten Sicherheitsstandards.

In einer weiteren bevorzugten Ausführungsform ist die Unterkonstruktion dadurch gekennzeichnet, dass der stabförmigen Träger als Hohl oder als Vollprofil ausgestaltet ist.

In einer weiteren bevorzugten Ausführungsform ist die Unterkonstruktion dadurch gekennzeichnet, dass der stabförmigen Träger als Rund-, Vierkant-, Rechteck-, C-, U - Profil ausgestaltet sind. Insbesondere derartige Profile weisen gute Eigenschaften im Hinblick auf Biegebelastungen und Torsionsbelastungen auf.

In einer weiteren bevorzugten Ausführungsform ist der Durchmesser der stabförmigen Träger bevorzugt in einem Bereich von 1,2 cm bis 2,0 cm, stärker bevorzugt 1,4 cm bis 1,8 cm ausgestaltet. Obwohl die Träger einen im Vergleich zu den Dimensionen der PV-Module nur sehr geringe Durchmesser aufweisen, sind diese ausreichend stabil. Die kleinen Durchmesser sind darüber hinaus materialsparend, gewichtsarm und demnach wirtschaftlich. Auch in Bezug auf die Montage und den Transport der Unterkonstruktionen erweisen sich die kleinen Durchmesser als großer Vorteil im Vergleich zu Aufbauten aus dem Stand der Technik.

In einer weiteren bevorzugten Ausführungsform der Unterkonstruktion weisen die Bodenstützen ausgehend von einem Boden eine Höhe von 50 cm bis 1000 cm, stärker bevorzugt 60 bis 250 cm, und insbesondere 70cm bis 150 cm auf, wobei die Anfangsbodenstützen bevorzugt kleiner sind als die Regelbodenstützen und Endbodenstützen.

In einer weiteren bevorzugten Ausführungsform ist die Unterkonstruktion dadurch gekennzeichnet, dass die Halterungen einen Werkstoff aus Metall und/oder Kunststoff umfassen.

In einer weiteren bevorzugten Ausführungsform ist die Unterkonstruktion dadurch gekennzeichnet, dass die erste sowie die zweite Halterung eine Einsteckhülse, bevorzugt aus verzinktem Stahl oder Aluminium, aufweisen und anhand dieser an den stabförmigen Trägern mit einer Schraub, Crimp- oder Klemmverbindung befestigt vorliegen.

In einer weiteren bevorzugten Ausführungsform ist der bevorzugte Stahl verzinkt nach DIN-Normen: EN 10143, EN 10346 & EN ISO 10244-1 und -2. Bandverzinkten Stähle werden dann z. B. durch Umformungen weiterverarbeitet.

In einer weiteren bevorzugten Ausführungsform ist die Unterkonstruktion dadurch gekennzeichnet, dass die erste sowie zweite Halterung ein Abstützelement, bevorzugt einen Eckaussteifung, aufweisen. Die Eckaussteifung ermöglicht vorteilhaft die Halterung von besonders schweren PV-Modulen, da die Halterung ein erhöhtes Biegemoment aufnehmen kann.

In einer weiteren bevorzugten Ausführungsform ist die Unterkonstruktion dadurch gekennzeichnet, dass der Bodenverankerungskörper aus einem metallischen Werkstoff ausgestaltet ist.

In einer bevorzugten Ausführungsform weist der Bodenverankerungskörper das gleiche Material wie die Halterung auf. Dies führt vorteilhaft dazu, dass kein elektrolytisches Gefälle zwischen Halterung und Bodenverankerungskörper auftritt und Korrosion bzw. Rost vermieden werden kann.

In einer weiteren bevorzugten Ausführungsform ist die Unterkonstruktion dadurch gekennzeichnet, dass der Bodenverankerungskörper Fortsätze, bevorzugt 1-10, stärker bevorzugt 2-6, besonders bevorzugt vier Fortsätze, mit Sägezahnmuster aufweist. Die Fortsätze sind bevorzugt gleichmäßig am Bodenverankerungskörper verteilt, sodass dieser gleichmäßig in einem Boden eingebracht und dort verankert werden kann.

Die Aufstellung mittels des Bodenverankerungskörpers ist auf robuste Weise einfach und schnell durchzuführen und vermeidet fehlerhafte Konstruktionen.

Der Bodenverankerungskörper ist bevorzugt aus einem Bauteil in einem Stück gefertigt, vorzugweise Metall, an deren Kanten spitze Dreiecke mit oder ohne Sägezahnmuster eingeschnitten und mit bis zu 90 Grad gegen eine Plattenebene anhand von Umformwerkzeugen abgebogen werden. Daraus resultiert ein Erdspies, der in einen Boden gerammt werden kann und dessen gezackte oder ungezackte Schnittkante sich mit dem Wurzelwerk der natürlichen Bepflanzung verbinden kann und als Widerhaken wirken.

In einer weiteren bevorzugten Ausgestaltung weist der Bodenverankerungskörper eine Vielzahl von Fortsätzen auf bevorzugt 1 - 10, stärker bevorzugt, 2 -6 und insbesondere 4.

Je mehr Fortsätze bzw. desto tiefere Fortsätze der Bodenverankerungskörper aufweist, desto größer muss eine Kraft aufgebracht werden, welche nötig ist, um den Bodenverankerungskörper in einen Boden einzubringen. Mit der Anzahl der Fortsätze erhöht sich jedoch auch die Verankerungskraft des Bodenverankerungskörpers. Diese verhindert ein Lösen des Bodenverankerungskörpers aus einem Boden. Die bevorzugt genannten Anzahl der Fortsätze bilden dabei vorteilhaft ein besonders gutes Verhältnis zwischen der Kraft zum Einbringen des Bodenverankerungskörpers in einen Boden und der Verankerungskraft, welche verhindert, dass der Körper aus einem Boden durch äußere Umweltbedingungen herausgerissen wird.

Vorteilhaft kann die Verankerungskraft zudem durch weiteren Bewuchs im Feld zusätzlich unterstützt werden, sodass auch langfristig eine besonders stabile Unterkonstruktion gewährleistet werden kann.

In einer weiteren bevorzugten Ausführungsform ist die Unterkonstruktion dadurch gekennzeichnet, dass der Bodenverankerungskörper ein zentrales Bohrloch mit einer Einsteckhülse aufweist, wobei die Einsteckhülse dazu eingerichtet ist den stabförmigen Träger aufzunehmen.

In einer weiteren bevorzugten Ausführungsform betrifft die Erfindung ein System zur Montage von sich selbstragenden Photovoltaikmodulen umfassend eine Unterkonstruktion der eingangs genannten Art und Photovoltaikmodule dadurch gekennzeichnet, dass eine Vielzahl von

- Anfangsbodenstützen in einer Anfangsreihe
- Endbodenstützen in einer Endreihe,
- Regelbodenstützen in einer oder mehreren Reihen, zwischen der Anfangs- und Endreihe liegend

vertikal in einen Boden eingebracht vorliegen und die Reihen im Wesentlichen parallel zueinander verlaufen.

Der Fachmann erkennt, dass bevorzugte Ausführungsformen und Vorteile, welche im Zusammenhang mit der Unterkonstruktion umfassend die Bodenstützen offenbart wurden, sich gleichermaßen auf das beanspruchte System aus Unterkonstruktion und Photovoltaikmodulen übertragen, und umgekehrt.

In einer weiteren bevorzugten Ausführungsform ist das System dadurch gekennzeichnet, dass ein Photovoltaik Modul durch vier Bodenstützen gehaltert wird, wobei mindestens zwei Bodenstützen Regelbodenstützen sind. So können beispielsweise PV-Module durch zwei Anfangsstützen und zwei Regelbodenstütze oder durch vier Regelbodenstützen oder durch zwei Regelbodenstützen und zwei Endbodenstützen gehaltert werden.

In einer weiteren bevorzugten Ausführungsform ist das System dadurch gekennzeichnet, dass zwei nebeneinander angeordnete Photovoltaikmodule durch zwei identisch gestaltet Bodenstützen gehaltert werden. Zwei in einer Reihe liegende PV-Module können sich zum Beispiel dabei eine Anfangsbodenstütze sowie eine Regelbodenstütze oder eine Regelbodenstütze und eine Endbodenstütze oder zwei Regelbodenstützen teilen. Zwei in verschiedenen Reihen angeordnete PV- Module teilen sich hingegen bevorzugt zwei gleiche Regelbodenstützen.

In einer weiteren bevorzugten Ausführungsform ist das System dadurch gekennzeichnet, dass die Photovoltaikmodule über Verbindungsmittel an den Halterungen gehaltert werden.

In einer bevorzugten Ausführungsform werden Rahmen der PV-Module anhand einer Klammer kraftschlüssig mit der Halterung verbunden. Bei der Klammer handelt es sich bevorzugt um eine doppelseitige Klammer, welche zwei Module anbringen kann. Darüber hinaus weist die Halterung eine Klammeröffnung und Zentrierelemente auf, welche über die Auflagefläche der Halterung hinausragen. Diese sind so bevorzugt ausgestaltet, dass sie den Rahmen der PV-Module führen. Sie führen ferner formschlüssig dazu, dass die Verbindung Rahmen/ Halterung positionsfest sitzt. Die doppelseitige Klammer ist in der Klammeröffnung eingebracht und darüber fest mit der Halterung lösbar verbunden.

In einer weiteren bevorzugten Ausführungsform werden die Rahmen der PV-Module anhand einer Endklammer an der Halterung befestigt. Die Endklammer ist bevorzugt dazu eingerichtet PV-Module zu haltern, welche an Bodenstützen der ersten Reihe und/oder ersten Spalte oder der letzten Reihe und/oder letzten Spalte angebracht sind. An diesen Bodenstützen können bevorzugt auch nur ein PV-Modul pro Halterung angebracht sein, sodass die Klammer keine doppelseitige Ausgestaltung aufweist.

In einer weiteren bevorzugten Ausführungsform liegen zwischen den Anfangsbodenstützen und den Endbodenstützen 5, 10, 20 bis zu 100 oder mehr Reihen von Regelbodenstützen eingebracht vor, abhängig von der Systemspannung der verwandten Module und der erforderlichen Anzahl der Module, um einen String zu bilden. Wie obig erläutert, ist es ein besonderer Vorteil der Erfindung, dass eine derart hohe Anzahl an Reihen von Regelbodenstützen hintereinander aufgestellt werden, kann, ohne Instabilitäten zu verursachen. Insbesondere muss kein Aufmontieren in der Höhe erfolgen, sodass auch die letzten Regelbodenstützen bzw. die Endbodenstütze kleiner als 250 cm gehalten werden können. Zudem verringert ein Spalt zwischen den einzelnen Reihen eine Angriffsfläche für Luftströmungen oder Wind.

In einer weiteren bevorzugten Ausführungsform betrifft die Erfindung ein Verfahren zur Montage von sich selbstragenden Photovoltaikmodulen mit einer Unterkonstruktion der eingangs genannten Art und/oder einem System der eingangsgenannten Art

dadurch gekennzeichnet, dass
eine Vielzahl von

- Anfangsbodenstützen in einer Anfangsreihe
- Endbodenstützen in einer Endreihe,
- Regelbodenstützen in einer oder mehreren Reihen, zwischen der Anfangs- und Endreihe liegend

vertikal in einen Boden eingebracht werden und die Reihen im Wesentlichen parallel zueinander verlaufen.

Der Fachmann erkennt, dass bevorzugte Ausführungsformen und Vorteile, welche im Zusammenhang mit der Unterkonstruktion umfassend die Bodenstützen bzw. dem System offenbart wurden, sich gleichermaßen auf das beanspruchte Verfahren übertragen, und umgekehrt.

Das Montageverfahren ist vorteilhaft besonders einfach und robust auszuführen. Hierbei kann es bevorzugt sein, dass die Anfangs-, Regel- bzw. Endbodenstützen mit den Halterungen unmittelbar im Feld bereitgestellt werden. So können beispielsweise Halterungen mit unterschiedlichen Neigungswinkeln zur Verfügung bereitliegen und je nach Bodenbeschaffenheit für eine jeweilige Reihe von Regelbodenstützen an den stabförmigen Träger angebracht werden. Beispielsweise kann es bevorzugt ein Set von mit 3, 4, 5, 6 oder mehr Typen von Halterungen mit stumpfen Einschlusswinkeln mit der Einsteckhülse zwischen 90° und 120° sowie ein Set von 3, 4, 5, 6 oder Typen von Halterungen mit spitzen Einschlusswinkeln mit der Einsteckhülse zwischen 60° und 90° bereitzuhalten.

Die Halterungen mit stumpfen Einschlusswinkel können bevorzugt als erste (untere) Halterung für die Anfangsbodenstützen oder dritte (untere) Halterungen für die Regelbodenstützen eingesetzt werden. Die Halterungen mit spitzen Einschlusswinkel können bevorzugt als zweite (obere) Halterung für die Regelbodenstützen oder vierte (obere) Halterungen für die Regelbodenstützen verwandt werden. Je nach Bodenanstieg im Bereich der jeweilig aufzustellenden Reihe kann bevorzugt eine Halterung mit einem spitzen oder stumpfen Winkel ausgesucht werden, welche den gewünschten Neigungswinkel gewährleistet. Eine Befestigung mittels Crimpen an den stabförmigen Träger hat sich zum Zwecke der Montage als besonders schnell und einfach erwiesen. Insbesondere erlaubt diese auch eine einfache Höhenanpassung der Halterungen am stabförmigen Träger im Gelände.

Das Verfahren umfasst bevorzugt zudem einen Schritt der Montage der Photovoltaikmodule auf den Halterungen.

In einer weiteren bevorzugten Ausführungsform betrifft die Erfindung zudem einen Kit zur Montage einer Unterkonstruktion gemäß der vorher beschriebenen Ausführungsformen umfassend eine Vielzahl von stabförmigen Trägern sowie eine Vielzahl von Halterungen umfassend jeweils eine Einsteckhülse eine Klammeröffnung und Zentrierelemente, wobei der innere Querschnitt der Einsteckhülse dem äußeren Querschnitt des stabförmigen Trägers entspricht, sodass die Halterung mittels der Einsteckhülse an den stabförmigen Trägern befestigt werden kann, wobei die Zentrierelemente über die Auflagefläche der Halterung ragen und derart ausgestaltet sind, dass diese einen Rahmen eines selbsttragenden Photovoltaikmoduls führen und wobei die Klammeröffnung der Aufnahme einer Klammer dient mittels derer der Rahmen des selbsttragenden Photovoltaikmodules kraftschlüssig mit der Halterung verbindbar ist, wobei

- eine erste Halterung der Bereitstellung einer Anfangsbodenstütze dient, wobei eine Auflagefläche der ersten Halterung einen Winkel $\alpha$ mit dem der Einsteckhülse einschließt, welcher einen Wert größer 90° aufweist
- eine zweite und eine dritte Halterung der Bereitstellung einer Regelbodenstütze dient und zu diesem Zweck in der Höhe versetzt zueinander an einem stabförmigen Träger installierbar sind, wobei eine Auflagefläche der zweiten Halterung einen Winkel $\beta$ und eine Auflagefläche der dritten Halterung einen Winkel $\gamma$ mit der jeweiligen Einsteckhülse einschließt, wobei der Winkel $\beta$ einen Wert kleiner 90° aufweist und der Winkel $\gamma$ einen Wert größer 90° aufweist
- eine vierte Halterung der Bereitstellung einer Endbodenstütze dient, wobei eine Auflagefläche der vierten Halterung einen Winkel $\delta$ der Einsteckhülse einschließt, welcher einen Wert kleiner 90° aufweist.

Der Fachmann erkennt, dass bevorzugte Ausführungsformen und Vorteile, welche im Zusammenhang mit der Unterkonstruktion umfassend die Bodenstützen bzw. dem System oder Verfahren offenbart wurden, sich gleichermaßen auf das beanspruchte Kit übertragen, und umgekehrt.

Ein derartiger Kit ist besonders vorteilhaft für den Einsatz im obig beschriebenen Verfahren. Die ersten bzw. dritten Halterungen mit stumpfen Einschlusswinkel können bevorzugt als untere Halterungen bezeichnet werden und zur Bereitstellung für die Anfangsbodenstützen oder untere Halterungen für die Regelbodenstützen eingesetzt werden. Die Halterungen mit spitzen Einschlusswinkel können bevorzugt als obere Halterungen bezeichnet werden und für obere Halterungen für die Regelbodenstützen oder die Regelbodenstützen verwandt werden.

In bevorzugten Ausführungsformen kann der Kit mit 3, 4, 5, 6 oder mehr Typen verschiedener unterer Halterungen mit stumpfen Einschlusswinkeln mit der Einsteckhülse zwischen 90° und 120° sowie 3, 4, 5, 6 oder mehr verschieden Typen oberer Halterungen mit spitzen Einschlusswinkeln mit der Einsteckhülse zwischen 60° und 90° umfassen.

Für den Aufbau der Unterkonstruktion im Gelände kann vorteilhaft jeweils die passenden unteren bzw. oberen Halterungen ausgewählt werden, um Anfangs-, Regel- oder Endbodenstützen zu erhalten. So kann gewährleistet werden, dass trotz Veränderungen des Bodenprofils stets ein gleicher Neigungswinkel der Photovoltaikmodule zur Sonne eingehalten werden kann. Ist beispielsweise ein Neigungswinkel von 20° zur im Süden stehenden Sonne bevorzugt, so ist im horizontalen flachen Gelände obere Halterungen von mit einem spitzen Einschlusswinkeln mit der Einsteckhülse von ca. 70° bevorzugt, während untere Halterungen bevorzugt einen stumpfen Einschlusswinkeln mit der Einsteckhülse von ca. 110° aufweisen. An einem Hang, welcher eine Neigung von 10° zur Südrichtung aufweist, kann es hingegen bevorzugt sein, für die jeweiligen Bodenstützen obere Halterungen mit einem spitzen Einschlusswinkeln mit der Einsteckhülse von ca. 80° und untere Halterungen mit einem stumpfen Einschlusswinkeln mit der Einsteckhülse von ca. 100° bereitzustellen. Durch die Bereitstellung eines Kits mit einer entsprechenden Anzahl verschiedener Typen von Halterungen kann somit auf einfache Weisung eine optimale Anpassung an Verhältnisse im Gelände erfolgen. Durch die einfachen Anbringungsmöglichkeiten der Halterungen an die Bodenstützen, beispielsweise durch Crimpen, können die passenden Bodenstützen einfach und zügig sukzessive bereitgestellt werden. Der Logistik- oder Planungsaufwand wird minimiert.

Detaillierte Beschreibung

Kurzbeschreibung der Figuren

Fig.1    Schematische Seitendarstellung eines bevorzugten Systems mit zwei Regelbodenstützenreihen

Fig.2    Schematische Seitendarstellung eines bevorzugten Systems mit einer Regelbodenstützenreihe

Fig. 3    Dreidimensionale Darstellung eines bevorzugten Systems mit zwei Regelbodenstützenreihen

Fig. 4    Draufsicht einer bevorzugten Halterung

Fig. 5    Dreidimensionale Darstellung zweier bevorzugter Halterungen

Fig. 6    Seitendarstellung einer bevorzugten Halterung und einer bevorzugten Halterungshülse

Fig. 7    Seitendarstellung eines selbstragenden Photovoltaikmoduls, welches von zwei bevorzugten Halterungen gehaltert wird

Fig. 8    Dreidimensionale Darstellung eines selbstragenden Photovoltaikmoduls, welches von zwei bevorzugten Halterungen gehaltert wird

Fig. 9    Draufsicht eines bevorzugten Bodenverankerungskörpers

Fig. 10    Seitenansicht eines bevorzugten Bodenverankerungskörpers

Fig. 11    Dreidimensionale Darstellung eines bevorzugten Bodenverankerungskörpers

Fig. 12    Dreidimensionale Darstellung einer bevorzugten Anfangsbodenstütze sowie einer bevorzugten Regelbodenstütze

Fig. 13    Dreidimensionale Darstellung in einer Nahaufnahme einer bevorzugten Halterung, zweier Rahmen bevorzugter selbsttragender Photovoltaikmoduls und eine Klammer

Fig. 14    Frontalansicht in einer Nahaufnahme einer bevorzugten Halterung, zweier Rahmen bevorzugter selbsttragender Photovoltaikmoduls und eine Klammer

Detaillierte Beschreibung der Figuren

**Fig. 1** ist eine schematische Darstellung einer bevorzugten Ausführungsform des erfindungsgemäßen Systems **1**. Das System **1** ist bevorzugt durch m Reihen und n Spalten von Bodenstützen ausgestaltet. **Fig. 1** illustriert eine Spalte des bevorzugten Systems **1**, in welcher drei verschiedene Bodenstützenreihen (m=3) parallel hintereinander durch Photovoltaikmodule **12** verbunden vorliegen.

Die Darstellung des Systems **1** umfasst in der ersten Reihe Anfangsbodenstützen **6**, in der zweiten Reihe Regelbodenstützen **8** und der dritten Reihe Endbodenstützen **10**. Die erste Reihe eines Systems **1** wird bevorzugt auch als Anfangsreihe bezeichnet. Die dargestellte Anfangsbodenstütze **6** weist eine bevorzugte erste (untere) Halterung **14** und einen bevorzugten stabförmigen Träger **2** auf. Die erste (untere) Halterung **14** schließt dabei bevorzugt einen Winkel $\alpha$ mit dem stabförmigen Träger **2** der Anfangsbodenstütze **6** ein. Es handelt sich bei dem Winkel $\alpha$ um einen rückseitigen Winkel der Auflagefläche **22** der Halterung **14**. Die dargestellte Regelbodenstütze **8** in der zweiten Reihe weist eine zweite (obere) und eine dritte (untere) Halterung **14** auf, welche in einer Höhe versetzt angebracht und diametral ausgerichtet sind. Die zweite (obere) Halterung **14** schließt bevorzugt einen Winkel $\beta$ und die dritte (untere) Halterung **14** schließt bevorzugt einen Winkel $\gamma$ mit den stabförmigen Träger **2** der Regelbodenstütze **8** ein. Die darauffolgende Reihe ist auch als Endreihe eines Systems **1** zu beschreiben. Sie weist Endbodenstützen **10** mit einer vierten (oberen) Halterung **14** auf. Die vierte (obere) Halterung **14** schließt einen Winkel δ mit dem stabförmigen Träger **2** der Endbodenstütze **10** ein. Auch die Winkel β, γ und δ sind durch die rückseitigen Auflageflächen **22** der jeweiligen Halterungen **14** und stabförmigen Trägern **2** definiert. Es gilt bevorzugt: α « γ > 90° und β ≈ δ < 90. Darüber hinaus ist α + β ≈ 180° oder β + γ ≈ 180° oder γ + δ ≈ 180°.

Der Neigungswinkel eines Photovoltaikmoduls **12**, das von Anfangsbodenstützen **6** und Regelbodenstützen **8** gehaltert wird entspricht in etwa α - 90° oder 90° - β (vorausgesetzt die Bodenstützen sind vertikal auf einen Boden ausgerichtet). Der Neigungswinkel eines Photovoltaikmoduls **12**, das von Regelbodenstützen **8** und Endbodenstützen **10** gehaltert wird entspricht in etwa γ - 90° oder 90° - δ (vorausgesetzt die Bodenstützen sind vertikal auf einem Boden ausgerichtet).

Die Halterungen **14** sind bevorzugt an Einsteckhülsen **16** befestigt. Die Einsteckhülsen **16** sind bevorzugt aus Aluminium ausgestaltet. Die Einsteckhülsen **16** werden an den stabförmigen Trägern **2** bevorzugt mittels Schraub, Crimp- oder Klemmverbindung befestigt. Alle beschriebenen Bodenstützen umfassen zudem jeweils einen Bodenverankerungskörper **4** mit jeweils vier Fortsätzen **18**.

**Fig. 2** ist eine schematische Darstellung einer weiteren bevorzugten Ausführungsform des erfindungsgemäßen Systems **1**. Im Vergleich zur dargestellten Ausführungsform aus **Fig. 1,** besteht das in **Fig. 2.** illustrierte System **1** nicht abschließend aus drei Reihen, sodass das System **1** fortlaufend durch weitere Bodenstützen und Photovoltaikmodule **12** ergänzt wird.

Die erste Reihe ist durch Anfangsbodenstützen **6** und die zweite Reihe durch Regelbodenstützen **8** ausgestaltet. Die dritte Reihe ist (im Gegensatz zu **Fig. 1.)** in **Fig. 2** mit weiteren Regelbodenstützen **8** ausgestaltet. Diese Regelbodenstützen weisen wiederum weitere (dritte, obere) Halterungen **14** auf, welche einen Winkel $\beta_1$ und $\gamma_1$ mit dem stabförmigen Träger **2** einschließen. Jede weitere auf die dritte Reihe folgende Regelbodenstützenreihe **8** würde einen Winkel $\sum_{i=2}^{m-1}\beta_i$ und einen Winkel $\sum_{i=2}^{m-1}\gamma_i$ einschließen. Die letzte Reihe eines jeden Systems **1** ist bevorzugt mit einer Endbodenstütze **10**, einer vierten (oberen) Halterung **14** und einem damit einhergehenden Winkel δ ausgestaltet. Zwischen Anfangs- und Endreihe können demnach eine Vielzahl von Regelbodenstützenreihen **8** vorliegen.

Ferner gilt bevorzugt

$$\alpha \approx \gamma \approx \gamma_1 \approx \sum_{i=2}^{m-1}\gamma_i > 90°$$ und

$$\beta \approx \beta_1 \approx \sum_{i=2}^{m-1}\beta_i \approx \delta < 90°$$ . Ein wesentlicher Vorteil für das bevorzugte System **1** ist die sogenannte Sägezahnanordnung der Photovoltaikmodule **12**. Dies kommt insbesondere durch die Winkelanordnung und dem Höhenversatz der Halterungen **14** der Regelbodenstütze **8** zustande und erlaubt eine großflächige Aufstellung ohne Stabilitätsverlust.

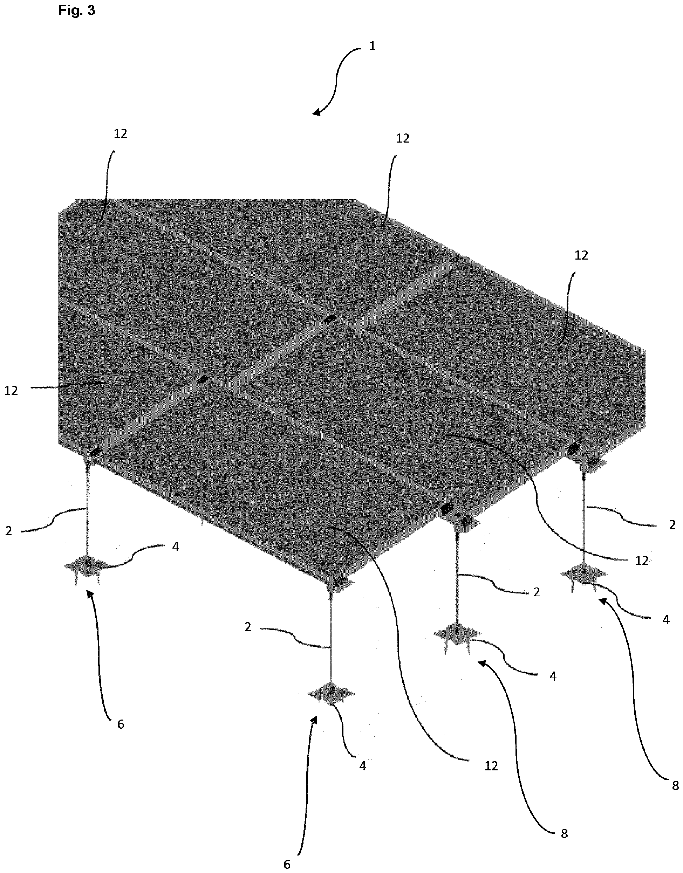

**Fig. 3** ist eine dreidimensionale Darstellung der bevorzugten Ausführungsform des Systems **1**, welches in **Fig. 2** dargestellt ist. Die Darstellung weist sechs Photovoltaikmodule **12** auf, die durch Anfangsbodenstützen **6** und Regelbodenstützen **8** gehaltert werden. Dabei teilen sich benachbarte Photovoltaikmodule **12** jeweils zwei Bodenstützen.

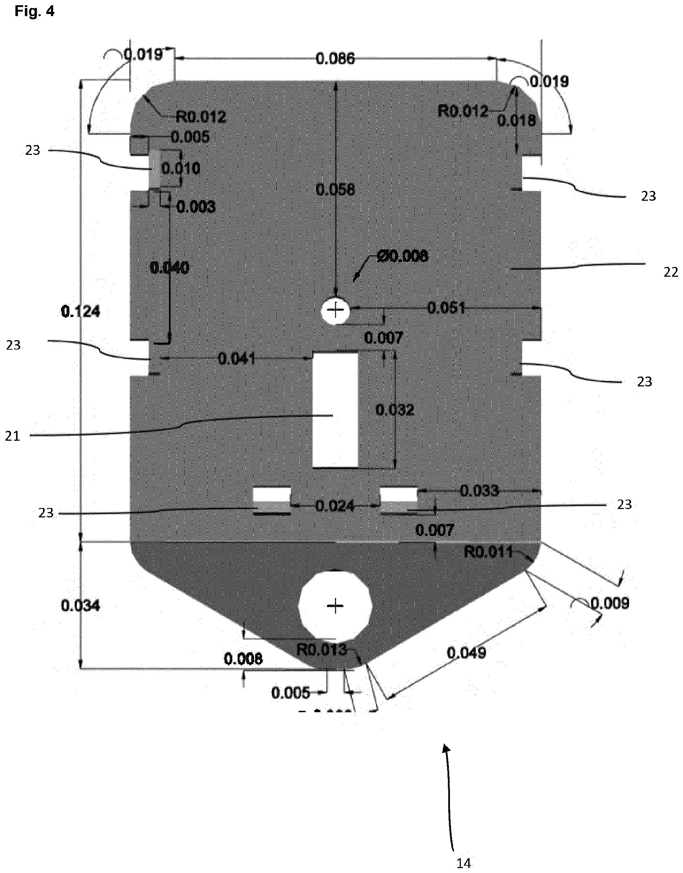

**Fig. 4** ist eine Darstellung einer Draufsicht einer bevorzugten Halterung **14**. Insbesondere die Auflagefläche **22** der Halterung **14** ist zu sehen. Ferner ist in einem unteren Bereich eine rund ausgestaltet Öffnung dargestellt, welche dazu eingerichtet ist auf eine Einsteckhülse **16** aufgesteckt zu werden. In den Randbereichen der Auflagefläche **22** sind insgesamt sechs Zentrierelemente **23** ausgestaltet, welche als Erhebungen über die Auflagefläche **22** hinausragen. Überdies weist die Halterung **14** eine Öffnung in Form eines Rechteckes für eine Befestigungsklammer **21** im Bereich der Längsachse der Halterung **14** auf. Die Zentrierelemente **23** sind dazu eingerichtet ein Photovoltaikmodulrahmen an seiner Unterseite in eine vordefinierte Position zu führen und ermöglicht damit eine simple rechtwinklige Montage der Photovoltaikmodule **12**.

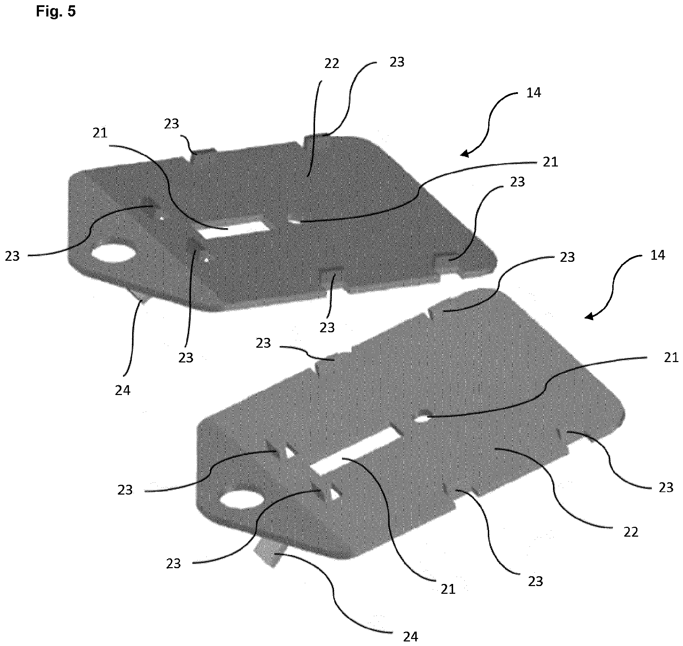

**Fig. 5** illustriert eine dreidimensionale Darstellung zweier bevorzugter Halterungen **14**. Die Halterungen **14** umfassen eine Auflagefläche **22** und insbesondere ein Abstützelement **24**, welches als eine Eck-Aussteifung ausgestaltet ist. Das Abstützelement ist dazu eingerichtet eine hohe Steifigkeit zu gewährleisten. Dementsprechend kann die Halterung erhöhte Lasten aufnehmen.

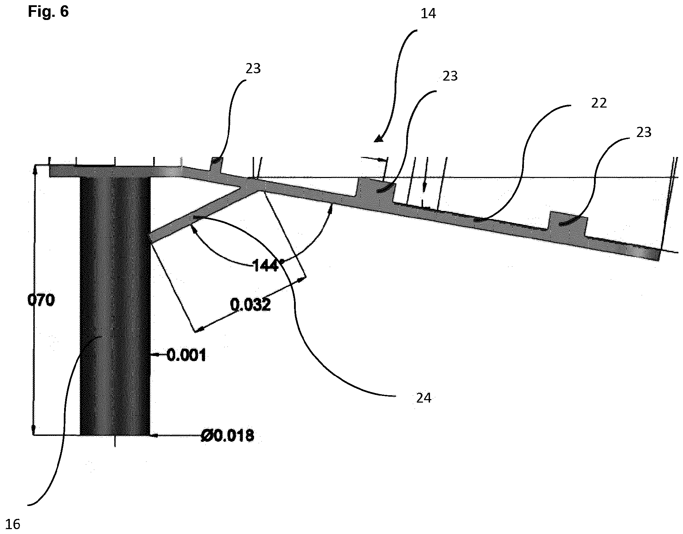

**Fig. 6** zeigt eine Seitendarstellung einer bevorzugten Halterung **14** und einer bevorzugten Halterungshülse **16**. Die Halterung **14** ist bevorzugt auf die Halterungshülse **16** über eine Spielpassung aufgesteckt und weist eine formschlüssige Verbindung auf. Durch die Ausgestaltung eines Abstützelementes **24** können auch vorteilhaft schwere Photovoltaikmodule **12** an der Auflagefläche **22** der Halterung **14** angebracht werden, da die Halterung **14** durch das Abstützelement **24** erhöhte Beigemomente standhalten kann.

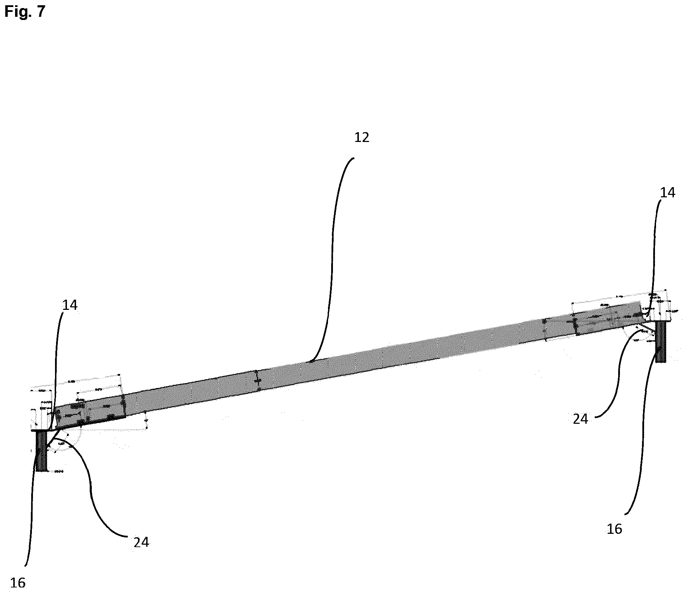

**Fig. 7** ist eine Seitendarstellung eines selbstragenden Photovoltaikmoduls **12**, welches von zwei bevorzugten Halterungen **14** gehalten wird. Das Photovoltaikmodul **12** ist dabei insbesondere auf den Auflagenfläche **22** der Halterungen **14** angebracht. Die Ausgestaltung der Halterungen **14** - das Aufweisen eines geöffneten und eines entsprechenden spitzen Winkels - das Photovoltaikmodul in einen vordefinierten Neigungswinkel in Bezug auf einen Boden auszurichten. Die Halterung **14** ist an einer Einsteckhülse **16** angebracht (s. auch **Fig. 6**). Die Einsteckhülse **16** wird in einem System **1** über einen stabförmigen Träger 2 gestülpt und anschließend an diesem über Verbindungsmittel in einer vorher bestimmten Höhe befestigt.

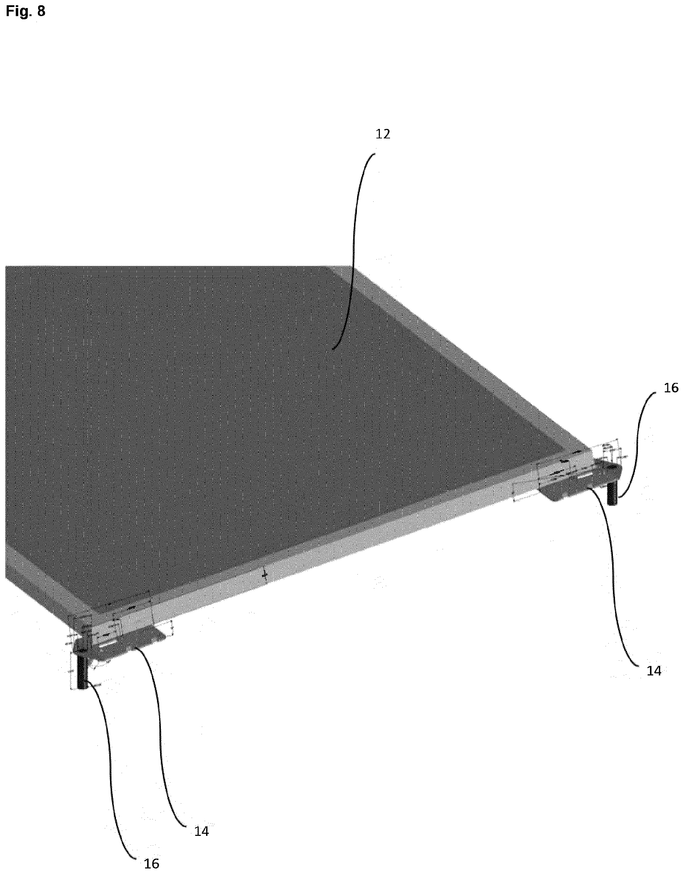

**Fig. 8** ist eine dreidimensionale Darstellung eines in **Fig. 7** schon aufgeführten selbstragenden Photovoltaikmoduls **12**, welches von zwei bevorzugten Halterungen **14** an den Photovoltaikmodul-Ecken gehalten wird. Das Photovoltaikmodul **12** wird dabei bevorzugt an seinem Rahmen gehalten, wobei dieser nur einen Teil, nämlich bevorzugt nur die Hälfte, der gesamten Auflagefläche **22** der Halterung **14** einnimmt. Dies hat den Vorteil, dass ein nebengeordnetes Photovoltaikmodul **12** ebenfalls die an der gleichen Halterung **14** anliegend angebracht werden kann.

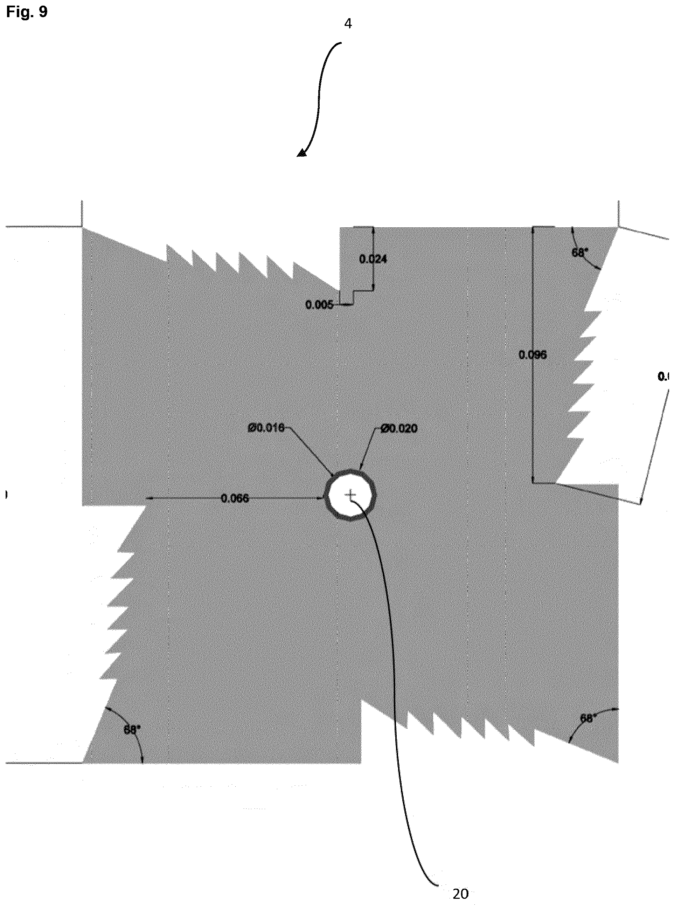

**Fig. 9** zeigt die Draufsicht eines bevorzugten Bodenverankerungskörpers **4**. Eine Einsteckhülse **20** ist auf dem Bodenverankerungskörper **4** zentriert angebracht. Ferner weisen die Seitenkonturen jeweils ein Sägezahnmuster auf. Die Herstellung eines solchen Bodenverankerungskörpers **4** geschieht in der Form, dass ein plattenförmiges Halbzeug aus metallischem Werkstoff in rechteckiger Ausgestaltung jeweils vier Schnitte in das Material erfährt. Die Schnitte gestalten sich in Form von Zacken und/oder Sägezahnen. Nach Durchführung der Schnitte werden die nach Außen gerichtete Flächen der Schnitte in einem Umformverfahren in einem Winkel von bis zu 120° gegen die Plattenebene des Halbzeuges nach unten umgeformt, sodass sich Fortsätze **18** bilden. Die Fortsätze **18** weisen aufgrund des gezackten Schnittes ebenfalls ein Sägezahnmuster auf. Das Sägezahnmuster wirkt vorteilhaft wie eine Aneinanderreihung von Widerhaken, wenn der Bodenverankerungskörper **4** in einen Boden eingebracht vorliegt.

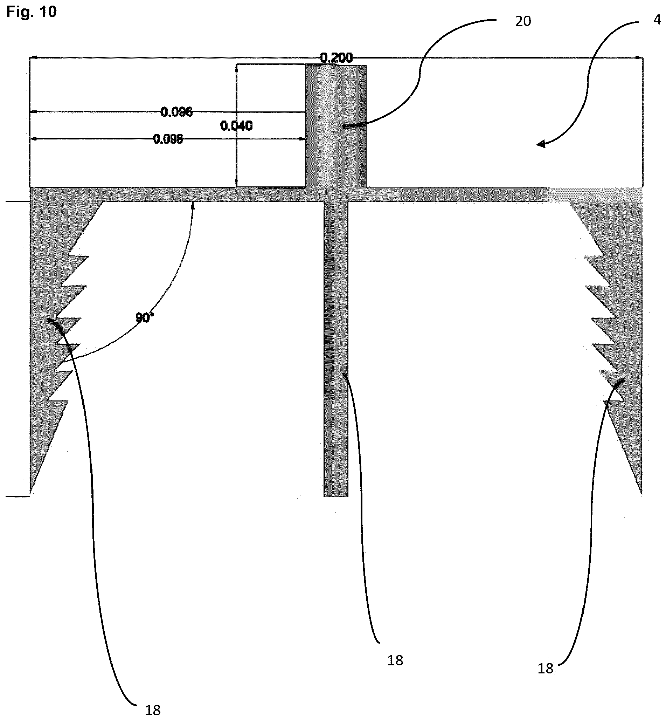

**Fig. 10** zeigt eine Seitenansicht eines bevorzugten Bodenverankerungskörpers **4**. Die Fortsätze **18** des Bodenverankerungskörpers **4** sind mit einem Sägezahnmuster ausgestaltet. Die Einsteckhülse **20** ist dazu eingerichtet, einen stabförmigen Träger **2** aufzunehmen. Durch Verbindungsmittel, bevorzugt mit einer Schraub, Crimp- oder Klemmverbindung wird der stabförmige Träger **2** mit der Einsteckhülse **20** fest verbunden.

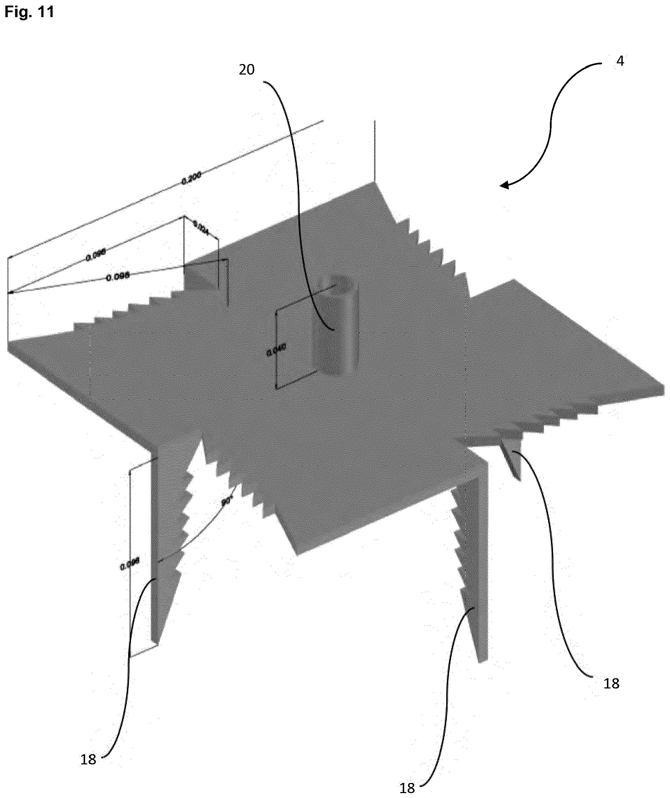

**Fig. 11** zeigt die dreidimensionale Darstellung eines bevorzugten Bodenverankerungskörpers **4**. Sowohl die Fortsätzen **18** als auch die Plattenebene des Bodenverankerungskörpers 4 weisen Sägezähne auf, da die Fortsätze **18** aus der Plattenebene herausgebogen wurden

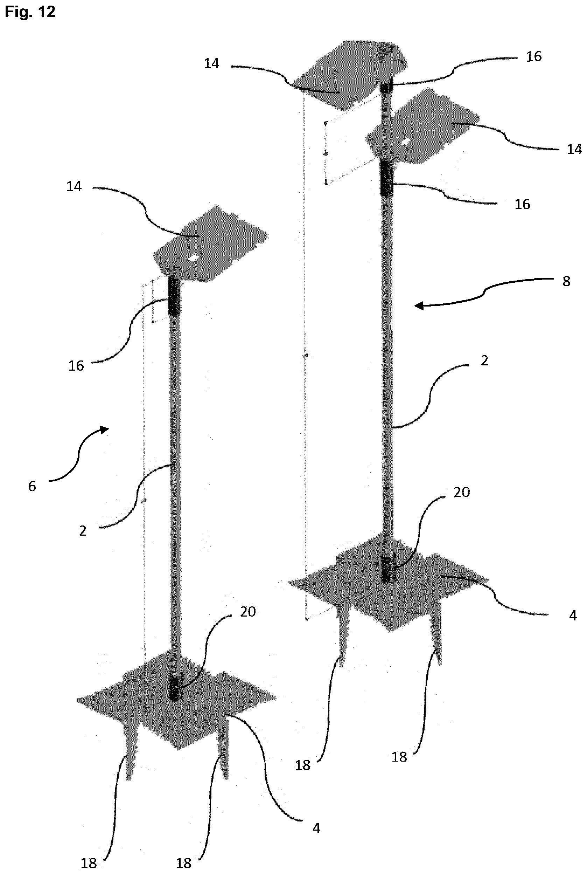

**Fig. 12** ist eine dreidimensionale Darstellung einer bevorzugten Anfangsbodenstütze **6** sowie einer bevorzugten Regelbodenstütze **8**. Die stabförmigen Träger **2** der Bodenstützen sind in die Bodenverankerungskörper **4** eingebracht und werden dort insbesondere durch die Einsteckhülsen **20** aufgenommen. In einem oberen Bereich der stabförmigen Träger **2** sind Halterungen **14** angebracht. Die Anfangsbodenstütze **6** weist dabei bevorzugt eine Halterung **14** auf, welche über eine Einsteckhülse **16** angebracht vorliegt. Die Regelbodenstütze **8** weist hingegen zwei diametral zueinander liegende Halterungen **14** (zweite und dritte Halterung **14**). Diese sind ebenfalls über entsprechende Einsteckhülsen **16** an den stabförmigen Trägern **2** angebracht.

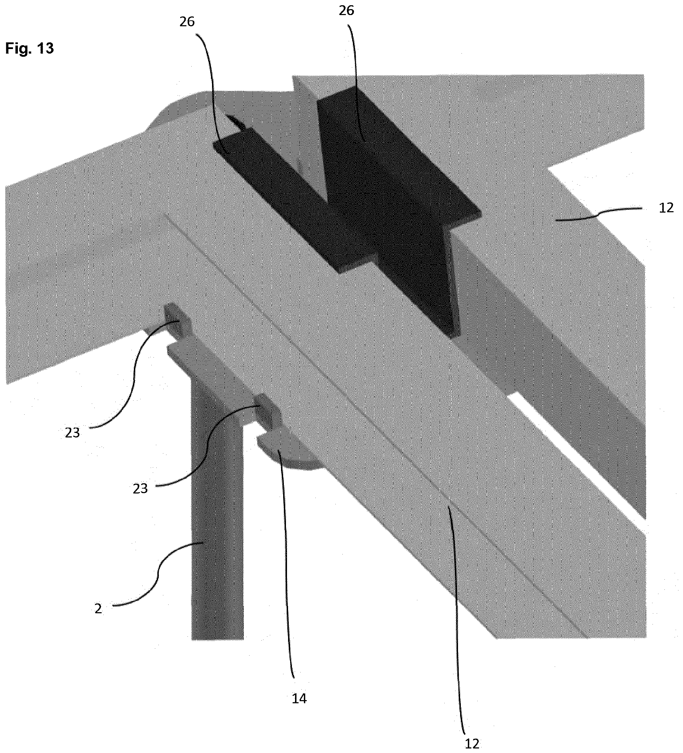

**Fig. 13** zeigt eine dreidimensionale Darstellung in einer Nahaufnahme einer bevorzugten Halterung **14**, zweier Rahmen bevorzugter selbsttragender Photovoltaikmodule **12** und einer Klammer **26**. Ein besonderer Vorteil der Halterung **14** ist die gleichzeitige Aufnahme zweier Photovoltaikmodule **12**. Die Photovoltaikmodule **12** werden in **Fig. 13** nur durch Rahmen schematisch dargestellt. Die Rahmen werden dabei anhand einer Klammer **26** kraftschlüssig mit der Halterung **14** verbunden. Bei der Klammer **26** handelt es sich um eine doppelseitige Klammer **26**, welche zwei Module **12** anbringen kann. Darüber hinaus sind Zentrierelemente **23,** welche über die Auflagefläche **22** der Halterung **14** hinaus ragen so ausgestaltet, dass sie den Rahmen führen. Sie führen ferner formschlüssig dazu, dass die Verbindung Rahmen/ Halterung positionsfest sitzt. Die doppelseitige Klammer **26** ist in der Klammeröffnung **21** eingebracht und darüber fest mit der Halterung **14** lösbar verbunden.

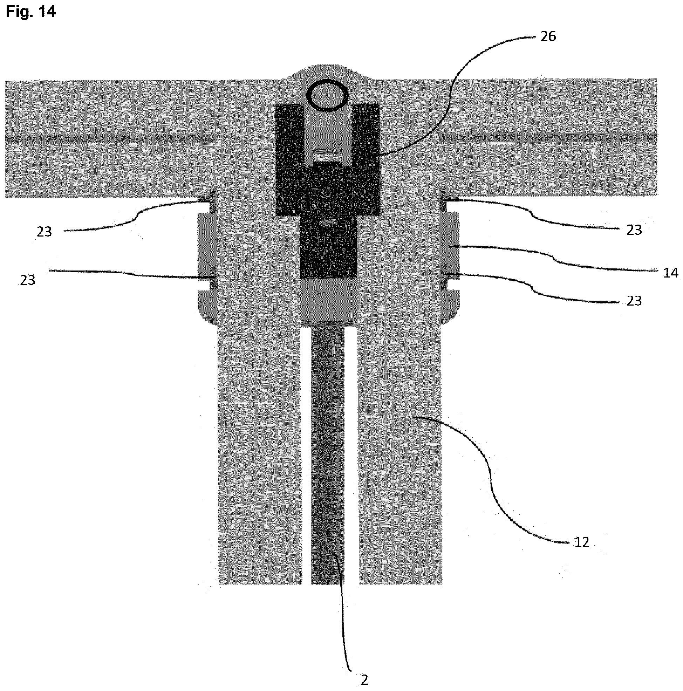

**Fig. 14** ist eine Frontalansicht in einer Nahaufnahme einer bevorzugten Halterung **14,** zweier Rahmen bevorzugter selbsttragender Photovoltaikmodule **12** und einer doppelseitigen Klammer **26**. Die Darstellung ist eine veränderte Ansicht der Ausführungsform in **Fig. 13**.

Bezugszeichenliste

| | |
|---|---|
| 1 | System zur Montage von sich selbstragenden Photovoltaikmodulen |
| 2 | Stabförmiger Träger |
| 4 | Bodenverankerungskörper |
| 6 | Anfangsbodenstützen |
| 8 | Regelbodenstützen |
| 10 | Endbodenstütze |
| 12 | Photovoltaikmodul |
| 14 | Halterung |
| 16 | Halterungshülse |
| 18 | Fortsatz Bodenverankerungskörper |
| 20 | Einsteckhülse Bodenverankerungskörper |
| 21 | Öffnung für Klammer |
| 22 | Auflagefläche einer Halterung |
| 23 | Zentrierelement |
| 24 | Abstützelement |
| 26 | Klammer |

**Patentansprüche**

**1.** Unterkonstruktion zur Montage von sich selbsttragenden Photovoltaikmodulen (12) umfassend Bodenstützen, wobei die Bodenstützen Halterungen (14) zur Aufnahme der selbsttragenden Photovoltaikmodule (12), einen Bodenverankerungskörper (4) und einen stabförmigen Träger (2) aufweisen, wobei die Unterkonstruktion ausschließlich Bodenstützen umfasst, an denen die selbsttragenden Photovoltaikmodule (12) unmittelbar angebracht werden können, sodass auf die Verwendung von Längs- und Querträgern verzichtet werden kann und wobei die Bodenstützen als Anfangsbodenstützen (6), Regelbodenstützen (8) und Endbodenstützen (10) ausgestaltet sind, wobei

- die Anfangsbodenstützen (6) jeweils eine erste Halterung (14) umfassen;
wobei eine Auflagefläche (22) der ersten Halterung (14) einen Winkel α mit dem stabförmigen Träger (2) der Bodenstütze einschließt, welcher einen Wert größer 90° aufweist
- die Regelbodenstützen (8) jeweils eine zweite und eine dritte Halterung (14) umfassen,

welche in der Höhe versetzt zueinander sind und
wobei eine Auflagefläche (22) der zweiten Halterung (14) einen Winkel β und eine Auflagefläche (22) der dritten Halterung (14) einen Winkel γ mit dem stabförmigen Träger (2) der Bodenstütze einschließt, wobei der Winkel β einen Wert kleiner 90° aufweist und der Winkel γ einen Wert größer 90° aufweist

- die Endbodenstütze (10) jeweils eine vierte Halterung (14) umfassen; wobei eine Auflagefläche (22) der vierten Halterung (14) einen Winkel δ mit dem stabförmigen Träger (2) der Bodenstütze einschließt, welcher einen Wert kleiner 90° aufweist,

wobei die Halterungen (14) jeweils eine Einsteckhülse (16), eine Klammeröffnung (21) und Zentrierelemente (23) aufweisen,
wobei der innere Querschnitt der Einsteckhülse (16) dem äußeren Querschnitt des stabförmigen Trägers (2) entspricht, sodass die Halterung (14) mittels der Einsteckhülse (16) auf dem stabförmigen Träger (2) befestigt vorliegt,
wobei die Zentrierelemente (23) über die Auflagefläche (22) der Halterung (14) ragen und derart ausgestaltet sind, dass diese einen Rahmen eines selbsttragenden Photovoltaikmoduls (12) führen und
wobei die Klammeröffnung (21) der Aufnahme einer Klammer (26) dient mittels derer der Rahmen des selbsttragenden Photovoltaikmodules (12) kraftschlüssig mit der Halterung (14) verbindbar ist.

2. Unterkonstruktion nach Anspruch 1
**dadurch gekennzeichnet, dass**
die zweite und dritte Halterung (14) der Regelbodenstützen (8) in Bezug auf den stabförmigen Träger (2) diametral angeordnet vorliegen, sodass selbsttragende Photovoltaikmodule (12) mindestens auf der ersten Halterung (14) der Anfangsbodenstützen (6) und der zweiten Halterung (14) der Regelbodenstützen (8) sowie auf der dritten Halterung (14) der Regelbodenstützen (8) und der vierten Halterung (14) installiert werden können.

3. Unterkonstruktion nach Anspruch 1 und/oder Anspruch 2
**dadurch gekennzeichnet, dass**
die Halterungen (14) jeweils eine vom Boden abgewendete Auflagefläche (22) aufweisen, welche dazu eingerichtet sind selbsttragende Photovoltaikmodule (12) zu halten, wobei die Halterungen (14) bevorzugt dazu eingerichtet sind eine Photovoltaikmodul-Ecke aufzunehmen.

4. Unterkonstruktion nach einem oder mehreren der vorhergehenden Ansprüche
**dadurch gekennzeichnet, dass**
der Winkel α und der Winkel γ einen Wert von 90° - 120° aufweisen und der Winkel β und der Winkel δ einen Wert von 60° - 90° aufweisen.

5. Unterkonstruktion nach einem oder mehreren der vorhergehenden Ansprüche
**dadurch gekennzeichnet, dass**
β und γ in der Summe einen Winkel von zwischen 170° und 190°, bevorzugt von etwa 180° ergeben, sodass die Auflageflächen (22) der zweiten und dritten Halterung (14) der Regelbodenstützen (8) im wesentlichen parallele Auflageflächen (22) bilden, welche in der Höhe vertikal versetzt sind.

6. Unterkonstruktion nach einem oder mehreren der vorhergehenden Ansprüche
**dadurch gekennzeichnet, dass**
der stabförmigen Träger (2) als Hohl oder als Vollprofil ausgestaltet ist und/oder der stabförmigen Träger (2) als Rund-, Vierkant-, Rechteck-, C-, U - Profil ausgestaltet ist.

7. Unterkonstruktion nach einem oder mehreren der vorhergehenden Ansprüche
**dadurch gekennzeichnet, dass**
die Bodenstützen ausgehend von einem Boden eine Höhe von 30 cm bis 250 cm aufweisen, wobei die Anfangsbodenstützen (6) bevorzugt kleiner sind als die Regelbodenstützen (8) und Endbodenstützen (10).

8. Unterkonstruktion nach einem oder mehreren der vorhergehenden Ansprüche
**dadurch gekennzeichnet, dass**
die Halterungen (14) eine Einsteckhülse (16), bevorzugt aus verzinktem Stahl oder Aluminium, aufweisen und anhand dieser an den stabförmigen Trägern (2) mit einer Schraub, Crimp- oder Klemmverbindung befestigt vorliegen.

9. Unterkonstruktion nach einem oder mehreren der vorhergehenden Ansprüche
**dadurch gekennzeichnet, dass**
die Halterungen (14) ein Abstützelement (24), bevorzugt eine Eckaussteifung, aufweisen.

10. Unterkonstruktion nach einem oder mehreren der vorhergehenden Ansprüche
**dadurch gekennzeichnet, dass**
der Bodenverankerungskörper (4) Fortsätze (18), bevorzugt 1-10, stärker bevorzugt 2-6, besonders bevorzugt vier Fortsätze (18), mit Sägezahnmuster aufweist und/oder der Bodenverankerungskörper (4) ein zentrales Bohrloch mit einer Einsteckhülse (20) aufweist, wobei die Einsteckhülse (20) dazu eingerichtet ist den stabförmigen Träger aufzunehmen.

11. Kit zur Montage einer Unterkonstruktion nach einem oder mehreren der vorhergehenden Ansprüche umfassend eine Vielzahl von stabförmigen Trägern (2) sowie eine Vielzahl von Halterungen (14) umfassend jeweils eine Einsteckhülse (16), eine Klammeröffnung (21) und Zentrierelemente (23), wobei der innere Querschnitt der Einsteckhülse (16) dem äußeren Querschnitt des stabförmigen Trägers (2) entspricht, sodass die Halterung (14) mittels der Einsteckhülse (16) an den stabförmigen Trägern (2) befestigt werden kann, wobei die Zentrierelemente (23) über die Auflagefläche (22) der Halterung (14) ragen und derart ausgestaltet sind, dass diese einen Rahmen eines selbsttragenden Photovoltaikmoduls (12) führen und wobei die Klammeröffnung (21) der Aufnahme einer Klammer (26) dient mittels derer der Rahmen des selbsttragenden Photovoltaikmodules (12) kraftschlüssig mit der Halterung (14) verbindbar ist, wobei

- eine erste Halterung (14) der Bereitstellung einer Anfangsbodenstütze (6) dient, wobei eine Auflagefläche (22) der ersten Halterung (14) einen Winkel $\alpha$ mit dem der Einsteckhülse (16) einschließt, welcher einen Wert größer 90° aufweist
- eine zweite und eine dritte Halterung (14) der Bereitstellung einer Regelbodenstütze (8) dient und zu diesem Zweck in der Höhe versetzt zueinander an einem stabförmigen Träger (2) installierbar sind, wobei eine Auflagefläche (22) der zweiten Halterung (14) einen Winkel $\beta$ und eine Auflagefläche (22) der dritten Halterung (14) einen Winkel $\gamma$ mit der jeweiligen Einsteckhülse (16) einschließt, wobei der Winkel $\beta$ einen Wert kleiner 90° aufweist und der Winkel $\gamma$ einen Wert größer 90° aufweist
- eine vierte Halterung (14) der Bereitstellung einer Endbodenstütze (10) dient, wobei eine Auflagefläche (22) der vierten Halterung (14) einen Winkel $\delta$ der Einsteckhülse (16) einschließt, welcher einen Wert kleiner 90° aufweist.

12. System (1) zur Montage von sich selbstragenden Photovoltaikmodulen (12) umfassend eine Unterkonstruktion nach einem oder mehreren der vorhergehenden Ansprüche 1-10 oder einen Kit nach dem vorgehenden Anspruch sowie selbstragende Photovoltaikmodule (12)
**dadurch gekennzeichnet, dass**
eine Vielzahl von

- Anfangsbodenstützen (6) in einer Anfangsreihe
- Endbodenstützen (10) in einer Endreihe,
- Regelbodenstützen (8) in einer oder mehreren Reihen, zwischen der Anfangs- und Endreihe liegend

vertikal in einen Boden eingebracht vorliegen und die Reihen im Wesentlichen parallel zueinander verlaufen.

13. System (1) nach Anspruch 12
**dadurch gekennzeichnet, dass**
ein selbstragendes Photovoltaikmodul (12) durch vier Bodenstützen gehaltert wird, wobei mindestens zwei Bodenstützen Regelbodenstützen (8) sind und/oder zwei nebeneinander angeordnete Photovoltaikmodule (12) durch zwei identische Bodenstützen gehaltert werden.

14. System (1) nach Anspruch 12 oder 13
**dadurch gekennzeichnet, dass**
zwischen der Anfangsreihe der Anfangsbodenstützen und der Endreihe der Endbodenstützen 5, 10, 20, 50, 100 oder mehr Reihen von Regelbodenstützen eingebracht vorliegen.

15. Verfahren zur Montage von sich selbstragenden Photovoltaikmodulen mit einer Unterkonstruktion nach Anspruch 1 - 10, einem Kit nach Anspruch 11 und/oder einem System nach Anspruch 12-14
**dadurch gekennzeichnet, dass**
eine Vielzahl von

- Anfangsbodenstützen (6) in einer Anfangsreihe
- Endbodenstützen (10) in einer Endreihe,
- Regelbodenstützen (8) in einer oder mehreren Reihen, zwischen der Anfangs- und Endreihe liegend

vertikal in einen Boden eingebracht werden und die Reihen im Wesentlichen parallel zueinander verlaufen.

**Claims**

1. A substructure for mounting self-supporting photovoltaic modules (12) comprising ground sockets, wherein the ground sockets have holders (14) for receiving the self-supporting photovoltaic modules (12), a ground anchoring body (4) and a rod-shaped support (2),
   wherein
   the substructure exclusively comprises ground sockets to which the self-supporting photovoltaic modules (12) can be directly attached, so that the use of longitudinal and transverse supports can be dispensed with, and wherein the ground sockets are designed as initial ground sockets (6), standard ground sockets (8) and end ground sockets (10), wherein

   - each of the initial ground sockets (6) comprises a first holder (14);

   wherein a support surface (22) of the first support (14) encloses an angle α with the rod-shaped support (2) of the ground socket, which has a value of greater than 90°

   - the standard ground sockets (8) each have a second and a third holder (14), which are offset in height to each other and

   wherein a support surface (22) of the second holder (14) encloses an angle β and a support surface (22) of the third holder (14) encloses an angle γ with the rod-shaped support (2) of the ground socket, wherein the angle β has a value smaller than 90° and the angle γ has a value greater than 90°

   - the end ground sockets (10) each comprise a fourth support (14); wherein a support surface (22) of the fourth support (14) includes an angle δ with the rod-shaped support (2) of the ground sockets, which has a value smaller than 90°,

   wherein the holders (14) each have an insertion sleeve (16), a clamp opening (21) and centering elements (23),

   wherein the inner cross-section of the insertion sleeve (16) corresponds to the outer cross-section of the rod-shaped support (2), so that the holder (14) is fixed on the rod-shaped support (2) by means of the insertion sleeve (16), wherein the centering elements (23) project above the support surface (22) of the holder (14) and are configured such that they guide a frame of a self-supporting photovoltaic module (12), and wherein the clamp opening (21) serves to receive a clamp (26) by means of which the frame of the self-supporting photovoltaic module (12) can be connected to the holder (14) in a frictional manner.

2. The substructure according to claim 1 **characterized in that** the second and third holders (14) of the standard ground sockets (8) are diametrically arranged with respect to the rod-shaped support (2), so that self-supporting photovoltaic modules (12) can be installed at least on the first holder (14) of the initial ground sockets (6) and the second holder (14) of the standard ground sockets (8) as well as on the third holder (14) of the standard ground sockets (8) and the fourth holder (14).

3. The substructure according to claim 1 and/or claim 2 **characterized in that** the holders (14) each have a support surface (22) facing away from the ground, which are adapted to hold self-supporting photovoltaic modules (12), wherein the holders (14) are preferably adapted to receive a photovoltaic module corner.

4. The substructure according to any one or more of the preceding claims **characterized in that** the angle α and the angle γ have a value of 90° - 120° and the angle β and the angle δ have a value of 60° - 90°.

5. The substructure according to any one or more of the preceding claims **characterized in that** β and γ result in an angle of between 170° and 190° in total, preferably of about 180°, so that the support surfaces (22) of the second and third holders (14) of the standard ground sockets (8) form substantially parallel support surfaces (22) which are vertically offset in height.

6. The substructure according to any one or more of the preceding claims **characterized in that** the rod-shaped support (2) is designed as a hollow or solid profile and/or the rod-shaped support (2) is designed as a round, square, rectangular, C or U profile.

7. The substructure according to any one or more of the preceding claims **characterized in that** the ground sockets have a height of 30 cm to 250 cm starting from a floor, wherein the initial ground sockets (6) preferably are smaller than the standard ground sockets (8) and end ground sockets (10).

8. The substructure according to any one or more of the preceding claims **characterized in that** the holders (14) have an insertion sleeve (16), preferably made of galvanized steel or aluminum, and are fastened by means of this sleeve to the rod-shaped supports (2) with a screw, crimp or clamp connection.

9. The substructure according to any one or more of the preceding claims **characterized in that** the holders (14) have a support element (24), preferably a corner stiffener.

10. The substructure according to any one or more of the preceding claims **characterized in that** the ground anchoring body (4) has extensions (18), preferably 1-10, more preferably 2-6, particularly preferably four extensions (18), with a serrated pattern and/or the ground anchoring body (4) has a central borehole with an insertion hull (20), wherein the insertion hull (20) is adapted to receive the rod-shaped support.

11. A kit for mounting a substructure according to any one or more of the preceding claims comprising a plurality of rod-shaped supports (2) and a plurality of holders (14) each comprising an insertion sleeve (16), a clamp opening (21) and centering elements (23), wherein the inner cross-section of the insertion sleeve (16) corresponds to the outer cross-section of the rod-shaped support (2) so that the holder (14) can be fastened to the rod-shaped supports (2) by means of the insertion sleeve (16), wherein the centering elements (23) project beyond the support surface (22) of the holder (14) and are configured in such a way that they guide a frame of a self-supporting photovoltaic module (12) and wherein the clamp opening (21) serves to receive a clamp (26) by means of which the frame of the self-supporting photovoltaic module (12) can be connected in a force-fitting manner to the holder (14), wherein

- a first support (14) serves for providing an initial ground socket (6), a support surface (22) of the first support (14) forming an angle $\alpha$ with that of the insertion sleeve (16) which has a value greater than 90°
- a second and a third holder (14) serve to provide a standard ground socket (8) and for this purpose can be installed on a rod-shaped support (2) offset in height relative to one another, wherein a support surface (22) of the second holder (14) forms an angle $\beta$ and a support surface (22) of the third holder (14) forms an angle $\gamma$ with the respective insertion sleeve (16), wherein the angle $\beta$ has a value of less than 90° and the angle $\gamma$ has a value of greater than 90°
- a fourth support (14) serves to provide an end ground socket (10), wherein a support surface (22) of the fourth support (14) includes an angle $\delta$ of the insertion sleeve (16), which has a value smaller than 90°.

12. A system (1) for mounting self-supporting photovoltaic modules (12) comprising a substructure according to any one or more of the preceding claims 1-10 or a kit according to the preceding claim and self-supporting photovoltaic modules (12) **characterized in that** a plurality of

- initial ground sockets (6) in an initial row
- end ground sockets (10) in an end row,
- standard ground sockets (8) in one or more rows, located between the initial and end row

are present vertically in a ground and the rows are substantially parallel to each other.

13. The system (1) according to claim 12 **characterized in that** a self-supporting photovoltaic module (12) is supported by four ground sockets, wherein at least two ground sockets are standard ground sockets (8) and/or two photovoltaic modules (12) arranged next to one another are supported by two identical ground sockets.

14. The system (1) according to claim 12 or 13 **characterized in that** there are 5, 10, 20, 50, 100 or more rows of standard ground sockets between the initial row of initial ground sockets and the end row of end ground sockets.

15. A method of mounting self-supporting photovoltaic modules with a substructure according to claim 1-10, a kit according to claim 11, and/or a system according to claim 12-14 **characterized in that** a plurality of

- initial ground sockets (6) in an initial row
- end ground sockets (10) in an end row,
- standard ground sockets (8) in one or more rows, located between the initial and end row

are inserted vertically into a ground and the rows are essentially parallel to each other.

**Revendications**

1. Structure porteuse destinée au montage de modules photovoltaïques autoportants (12) comprenant des supports au sol, dans laquelle les supports au sol présentent des fixations (14) pour recevoir les modules photovoltaïques autoportants (12), un corps d'ancrage au sol (4) et un support en forme de tige (2), dans laquelle

la structure porteuse comprend exclusivement des supports au sol, sur lesquels les modules photovoltaïques autoportants (12) peuvent être fixés directement, de sorte que l'utilisation de supports longitudinaux et transversaux peut être supprimée et dans laquelle les supports au sol sont conçus comme des supports au sol initiaux (6), des supports au sol standards (8) et des supports au sol finaux (10), dans laquelle

- les supports au sol initiaux (6) comportent chacun une première fixation (14) ;

dans laquelle une surface d'appui (22) de la première fixation (14) forme un angle α avec le support en forme de tige (2) du support au sol, lequel angle a une valeur supérieure à 90°

- les supports au sol standards (8) comprennent chacun une deuxième et une troisième fixations (14)

qui sont décalées en hauteur l'une par rapport à l'autre et dans laquelle une surface d'appui (22) de la deuxième fixation (14) forme un angle β et une surface d'appui (22) de la troisième fixation (14) forme un angle γ avec le support en forme de tige (2) du support au sol, dans laquelle l'angle β a une valeur inférieure à 90° et l'angle γ a une valeur supérieure à 90°

- les supports au sol finaux (10) comprennent chacun une quatrième fixation (14) ; dans laquelle une surface d'appui (22) de la quatrième fixation (14) forme un angle δ avec le support en forme de tige (2) du support au sol, qui a une valeur inférieure à 90°,

dans laquelle les fixations (14) comportent chacune un manchon d'insertion (16), une ouverture de serrage (21) et des éléments de centrage (23),

dans laquelle la section transversale intérieure du manchon d'insertion (16) correspond à la section transversale extérieure du support en forme de tige (2), de sorte que la fixation (14) est fixée au support en forme de tige (2) au moyen du manchon d'insertion (16),
dans laquelle les éléments de centrage (23) dépassent de la surface d'appui (22) de la fixation (14) et sont conçus de sorte qu'ils guident un châssis d'un module photovoltaïque autoportant (12) et
dans laquelle l'ouverture de serrage (21) sert à recevoir une pince (26) au moyen de laquelle le châssis du module photovoltaïque autoportant (12) peut être relié de manière solidaire à la fixation (14).

2. Structure porteuse selon la revendication 1, **caractérisée en ce que**
la deuxième et la troisième fixations (14) des supports au sol standards (8) sont disposés diamétralement par rapport au support en forme de tige (2), de sorte que les modules photovoltaïques autoportants (12) peuvent être installés au moins sur la première fixation (14) des supports au sol initiaux (6) et sur la deuxième fixation (14) des supports au sol standards (8) ainsi que sur la troisième fixation (14) des supports au sol standards (8) et sur la quatrième fixation (14).

3. Structure porteuse selon la revendication 1 et/ou la revendication 2, **caractérisée en ce que**
les fixations (14) présentent chacune une surface d'appui (22) tournée à l'opposé du sol, lesquelles fixations sont configurées pour porter des modules photovoltaïques autoportants (12), dans laquelle les fixations (14) sont de préférence configurées pour recevoir un coin de module photovoltaïque.

4. Structure porteuse selon une ou plusieurs des revendications précédentes, **caractérisée en ce que**
l'angle α et l'angle γ ont une valeur de 90° à 120° et l'angle β et l'angle δ ont une valeur de 60° à 90°.

5. Structure porteuse selon une ou plusieurs des revendications précédentes, **caractérisée en ce que**
la somme de β et γ donne un angle allant de 170° à 190°, de préférence d'environ 180°, de sorte que les surfaces d'appui (22) des deuxième et troisième fixations (14) des supports au sol standards (8) forment des surfaces d'appui sensiblement parallèles (22), décalées verticalement en hauteur.

6. Structure porteuse selon une ou plusieurs des revendications précédentes, **caractérisée en ce que**
le support en forme de tige (2) est conçu sous la forme d'un profilé creux ou plein et/ou le support en forme de tige (2) est conçu sous la forme d'un profilé rond, carré, rectangulaire, en C, en U.

7. Structure porteuse selon une ou plusieurs des revendications précédentes, **caractérisée en ce que**
les supports au sol ont une hauteur de 30 cm à 250 cm à partir du sol, dans laquelle les supports au sol initiaux (6) sont de préférence plus petits que les supports au sol standards (8) et les supports au sol finaux (10).

8. Structure porteuse selon une ou plusieurs des revendications précédentes, **caractérisée en ce que**
les fixations (14) présentent un manchon d'insertion (16), de préférence en acier galvanisé ou en aluminium, et sont fixées au moyen de celui-ci aux supports en forme de tige (2) par une connexion à vis, à sertir ou à pince.

9. Structure porteuse selon une ou plusieurs des revendications précédentes,
**caractérisée en ce que**
les fixations (14) présentent un élément d'appui (24), de préférence un renfort de coin.

10. Structure porteuse selon une ou plusieurs des revendications précédentes, **caractérisée en ce que** le corps d'ancrage au sol (4) présente des saillies (18), de préférence 1 à 10, de manière davantage préférée 2 à 6, de manière particulièrement préférée quatre saillies (18), avec un motif en dents de scie et/ou le corps d'ancrage au sol (4) présente un trou central avec un manchon d'insertion (20), dans laquelle le manchon d'insertion (20) est configuré pour recevoir le support en forme de tige.

11. Kit pour le montage d'une structure porteuse selon une ou plusieurs des revendications précédentes, comprenant une pluralité de supports en forme de tige (2) et une pluralité de fixations (14), comprenant chacune un manchon d'insertion (16), une ouverture de serrage (21) et des éléments de centrage (23), dans lequel la section transversale intérieure du manchon d'insertion (16) correspond à la section transversale extérieure du support en forme de tige (2), de sorte que la fixation (14) peut être fixée aux supports en forme de tige (2) au moyen du manchon d'insertion (16), dans lequel les éléments de centrage (23) dépassent de la surface d'appui (22) de la fixation (14) et sont conçus de sorte qu'ils guident un châssis d'un module photovoltaïque autoportant (12) et l'ouverture de serrage (21) sert à recevoir une pince (26) au moyen de laquelle le châssis du module photovoltaïque autoportant (12) est relié de manière solidaire à la fixation (14), dans lequel

     - une première fixation (14) sert à fournir un support au sol initial (6), dans lequel une surface d'appui (22) de la première fixation (14) forme un angle $\alpha$ avec le manchon d'insertion (16), lequel angle a une valeur supérieure à 90°
     - une deuxième et une troisième fixations (14) servent à fournir un support au sol standards (8) et peuvent à cet effet être installées de manière décalée en hauteur l'une par rapport à l'autre sur un support en forme de tige (2), dans lequel une surface d'appui (22) de la deuxième fixation (14) forme un angle $\beta$ et une surface d'appui (22) de la troisième fixation (14) forme un angle $\gamma$ avec le manchon d'insertion (16) respectif, dans lequel l'angle $\beta$ a une valeur inférieure à 90° et l'angle $\gamma$ a une valeur supérieure à 90°
     - une quatrième fixation (14) sert à fournir un support au sol final (10), dans lequel une surface d'appui (22) de la quatrième fixation (14) forme un angle $\delta$ avec le manchon d'insertion (16), lequel angle a une valeur supérieure à 90°.

12. Système (1) destiné au montage de modules photovoltaïques autoportants (12) comprenant une structure porteuse selon une ou plusieurs des revendications précédentes 1 à 10 ou kit selon la revendication précédente et modules photovoltaïques autoportants (12)
**caractérisé en ce qu'**une pluralité

     - de supports au sol initiaux (6) sont placés verticalement dans une rangée initiale au sol,
     - de supports au sol finaux (10), dans une rangée finale au sol, de supports au sol standards (8), dans une ou plusieurs rangées au sol, entre la rangée initiale et la rangée finale et les rangées sont sensiblement parallèles les unes aux autres.

13. Système (1) selon la revendication 12
**caractérisée en ce qu'**un module photovoltaïque autoportant (12) est maintenu par quatre supports au sol, dans lequel au moins deux supports de sol sont des supports de sol standards (8) et/ou deux modules photovoltaïques (12) disposés l'un à côté de l'autre sont maintenus par deux supports au sol identiques.

14. Système (1) selon la revendication 12 ou 13, **caractérisé en ce que**
5, 10, 20, 50, 100 rangées ou plus de supports au sol standards sont placées entre la rangée initiale de supports au sol initiaux et la rangée finale de supports au sol finaux.

15. Procédé de montage de modules photovoltaïques autoportants comportant une structure porteuse selon les revendications 1 à 10, un kit selon la revendication 11 et/ou un système selon les revendications 12 à 14
**caractérisé en ce qu'**une pluralité

     de supports au sol initiaux (6) sont placés verticalement dans une rangée initiale au sol,
     de supports au sol finaux (10), dans une rangée finale au sol, de supports au sol standards (8), dans une ou plusieurs rangées au sol, entre la rangée initiale et la rangée finale
     et les rangées sont sensiblement parallèles les unes aux autres.

**Fig. 1**

**Fig. 2**

**Fig. 3**

**Fig. 4**

**Fig. 5**

Fig. 6

**Fig. 7**

**Fig. 8**

Fig. 9

4

0.024

0.005

68°

0.096

0.0

Ø0.016

Ø0.020

0.066

68°

68°

20

**Fig. 10**

**Fig. 11**

**Fig. 12**

**Fig. 13**

**Fig. 14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 203083185
- CN 202616248
- EP 2958230 A1
- DE 102018114621 A1
- DE 102009037978 B4
- DE 202010035000 B4
- EP 2771913 B1
- DE 102018114621